# EUROPEAN PATENT APPLICATION

(11) **EP 4 265 316 A1**
(43) Date of publication of application: **25.10.2023**
(21) Application number: 22169481.3
(22) Date of filing: 22.04.2022
(51) Int. Cl.: B01D 46/24

(54) **FILTER ASSEMBLY, FILTER ELEMENT AND METHOD FOR ASSEMBLY OF A FILTER ASSEMBLY**

(71) Applicant: Donaldson Company, Inc., Bloomington, MN 55431 (US)
(72) Inventor: VERSTRAETE, Mathijs, Bloomington, Minnesota 55431 (US); VAN DE POEL, Gunther, Bloomington, Minnesota 55431 (US)
(74) Representative: König Szynka Tilmann von Renesse Patentanwälte Partnerschaft mbB Düsseldorf

(57) **Abstract**

The invention relates to a filter assembly comprising
• a filter element that has a filter media and an endcap arranged at one end of the filter media,
• a housin), whereby the filter element is arranged inside the housing,
**characterized in that**
• the housing has a dome shaped receiving part that protrudes in a protruding direction from surrounding parts of the housing, whereby a through-hole is arranged in the receiving part that leads from the outside of the housing into the inside of the receiving part,
• the endcap has a protruding part that is at least partially received inside the dome shaped receiving part, whereby a recess is provided in the protruding part,
whereby a latch is provided that can be positioned
• in a locking position, whereby in the locking position the latch is arranged in the through-hole and in the recess and
• in a release position, whereby in the release position the latch is not arranged in the recess.

## Description

The invention pertains to a filter assembly. The invention also pertains to a method for assembly of a filter assembly. The invention also pertains to filter element.

From US 10,682,597 B2 a filter assembly is known that comprises a safety filter element (referred to as second filter media pack 1064 in the context of Fig. 3 of said reference) and a main filter element (referred to as the filter media pack 1026).

From WO 2017/106752 A1, an air filter cartridge comprising a media pack having a media pack outer perimeter and including media having opposite inlet and outlet flow ends is known. A seal arrangement circumscribing the media pack outer perimeter is provided, the seal arrangement including a radially directed first seal segment in at least one joining radially directed deviation seal segment extending away from the first seal segment in a direction towards one of the inlet and outlet flow ends.

From WO 2021/188967 A1, a filter element for insertion into a housing of a filter system is known, whereby the filter element comprises a filter media pack for filtering a fluid, having an outer circumferential face extending between a first outer axial face and a second outer axial face opposite the first outer axial face. The filter element further comprises a seal receiver sealingly attached to the filter medium pack and wherein the seal receiver comprises a closed-loop surface for receiving a removable circumferential seal member, whereby said closed-loop surface forms a contour shape with single-fold rotational symmetry.

A filter assembly as described in US 10,682,597 B2 uses the safety filter element to protect elements, like for example a combustion engine or a turbine, which are arranged downstream of the filter assembly in the instances, when the main filter element needs to be exchanged. When a main filter element is removed from the housing of the filter assembly, there is a risk of debris passing through the housing and leaving the housing via an outlet opening of the housing to then travel further towards the elements arranged downstream of the filter assembly with the risk of causing substantial damage to these elements, if a safety filter element is missing that prevents exactly this. With the safety filter element in place, the main filter element can be removed from the housing and replaced with a new main filter element without the risk existing that debris passing through the housing of the filter assembly and exits the housing at the outlet opening. Such debris will be caught by the safety filter element.

Given this background, the problem to be solved by the invention is to provide a filter assembly, a method for assembly of a filter assembly that increases the security of preventing unfiltered fluid to leave the filter assembly.

This problem is solved by a filter assembly according to claim 1, a method for assembly of a filter assembly according to claim 11, a filter element according to claim 12 and the uses of such a filter element as defined in claims 13 and 14. Preferred embodiments are discussed in the subordinate claims and the description following hereafter.

The invention is based on the general concept to provide a latch on the housing of the filter assembly that can be positioned
- µ in a locking position, whereby in the locking position the latch is arranged in a through-hole of a dome shaped receiving part of the housing and in a recess of a protruding part of an endcap of a filter element of the filter assembly and
- in a release position, whereby in the release position the latch is not arranged in the recess.

Providing the latch and designing the filter assembly in a manner that allows for the locking position and the release position provides the possibility to predefine a rotational position that the filter element is to take up relative to the housing for the latch to be moved from the release position into the locking position. The filter assembly can be designed such that the recess of the protruding part is only in alignment with the through-hole and such that the latch can only be brought into engagement with the recess, if the predefined rotational position of the filter element relative to the housing is reached. Making sure that the filter element and the housing have a predefined rotational position especially provides advantages in designs, where a sealing component within the housing provides its sealing function particularly well or even only provides its sealing function, if the filter element is in a particular rotational position.

The filter assembly according to the invention comprises a filter element that has a filter media and an endcap arranged at one end of the filter media. The filter assembly according to the invention can be designed to just have the one filter element. In such a design a sealing component could be provided between parts of the housing and parts of the filter element, for example the endcap to prevent fluid to be filtered to bypass the filter media. This sealing component could be arranged on a filter element circumferential support structure on the endcap, whereby the filter element circumferential support structure could be designed to have a contour shape with a single fold rotational symmetry.

In a preferred embodiment, the filter element filter assembly according to the invention is a main filter element of a filter assembly according to the invention that has the main filter element and a safety filter element.

The filter assembly according to the invention has a housing, whereby the filter element is arranged inside the housing.

The housing of the filter assembly according to the invention has at least one dome shaped receiving part that protrudes in a protruding direction from surrounding parts of the housing. A through-hole is arranged in the receiving part that leads from the outside of the housing into the inside of the receiving part. The through-hole preferably has a triangular, quadratic or rectangular or polygonial cross-section. Such a shape of a cross section prevents the latch that is arranged inside the trhough-hole from rotating along its longitudinal axis.

The invention also pertains to filter element that is suitable to be used in a filter assembly according to the invention. The filter element according to the invention comprises a filter media and an endcap arranged at one end of the filter media, the endcap having a protruding part, whereby a recess is provided in the protruding part. The safety filter element according to the invention preferably is a main filter element as described below. The safety filter element according to the invention preferably is a main filter element as described below of a filter system as described below or a filter assembly as described below.

The invention also pertains to the use of a filter element according to the invention in a filter assembly according to the invention.

The invention also pertains to the se of a filter element according to to the invention in a method according to the invention.

The endcap has a protruding part that is at least partially received (or suitable to be received) inside the dome shaped receiving part. In a preferred embodiment the shape of dome shaped receiving part is adapted to the shape of the protruding part. In a preferred embodiment the shape of dome shaped receiving part has the same basic geometric shape as the shape of the protruding part. In a preferred embodiment, the dome shaped receiving part has the shape of a truncated cone and the protruding part has the shape of a truncated cone. In an alternative embodiment, the shape of dome shaped receiving part has a different basic geometric shape as the shape of the protruding part. In a preferred embodiment, the dome shaped receiving part has the shape of a truncated cone and the protruding part has the shape of a cylinder.

At least one recess is provided in the protruding part. The recess can be a through-hole through the protruding part. The recess can, however, be designed like a blind hole. In a preferred embodiment the recess has a triangular, quadratic or rectangular or polygonial cross-section. In a preferred embodiment the cross-section of the recess has the same basic geometric shape as the cross-section of the through-hole of the receiving part. In a preferred embodiment, the recess has a rectangular cross-section and the through-hole has a rectangular cross-section.

The filter assembly according to the invention has at least on latch. The latch can be positioned
- in a locking position, whereby in the locking position the latch is arranged in the through-hole and in the recess and
- in a release position, whereby in the release position the latch is not arranged in the recess.

In a preferred embodiment the latch in the release position is provided in the through-hole but not in the recess.

The arrangement of the latch in the recess is to be understood to mean that a part of the latch, for example a tip of the latch is arranged in the recess. The arrangement of the latch in the recess is not to be understood to mean that the latch is arranged completely in the recess.

The arrangement of the latch in the through is to be understood to mean that a part of the latch, for example a central portion of the latch is arranged in the recess. The arrangement of the latch in the through hole is not to be understood to necessarily mean that the latch is arranged completely in the through-hole.

In a preferred embodiment, the receiving part has one single through-hole for the latch, but the endcap has several recesses, for example two, three or four, whereby the latch engages into that recess in the locking position that is in alignment with the through-hole. Such a design can be used, if there is more than one predetermined relative rotational position between the filter element and the housing, for example two, three or four predetermined relative rotational position.

In a preferred embodiment only one latch is provided and only one through-hole is provided. This facilitates the operation of the latch and does not confuse the user. Designs are feasible, where the receiving part has several through holes, but only one latch is provided. In such a design, the user can choose, into which through hole he places the latch. Designs are also feasible, where several latches and several through holes in the receiving part are provided. Increasing the number of latches increases the strength of the connection between the housing and the endcap that can be achieved by way of the latches engaging into the recesses of the endcap.

In a preferred embodiment the filter element can be rotated inside the housing when the latch is not arranged in the recess. This allows for the filter element to be aligned relative to the housing in such a manner that the recess is aligned with the through hole.

In a preferred embodiment the through-hole extends along a direction that is perpendicular to a plane that contains the protruding direction. In a preferred embodiment the through-hole extends radially from the dome shaped receiving part.

In a preferred embodiment the housing has a housing lid and in that the dome shaped receiving part is arranged on the housing lid. Designs are feasible where the dome-shaped receiving part is arranged on a central housing portion of a housing. However, providing the dome shaped receiving part facilitates the handling. For example the relative position of the filter element relative to the housing can be better adjusted, if the housing lid is lifted. After readjustment, the housing lid can be placed on the remainder of the housing and it can be checked, if the recess and the through hole are in correct alignment.

In a preferred embodiment the surrounding parts of the housing that surround the dome shaped receiving part have an outward facing surface that is arranged in a plane, whereby the receiving part protrudes outward from said plane into the protruding direction. The outward facing surface can for example be the outward facing surface of a housing lid.

In a preferred embodiment the protruding direction is the center axis of the filter assembly. In a preferred embodiment the dome shaped receiving part is arranged in the center of a housing lid.

In a preferred embodiment a spring element that pretensions the latch towards the locking position is provided.

In a preferred embodiment a snap-in element is provided on the latch or on the housing or on the filter-element, whereby the snap-in element engages if the latch is in the locking position.

In a preferred embodiment a seal that is arranged inside the through-hole and seals against the latch, if the latch is arranged in the through-hole.

In a preferred embodiment, a blocking element is provided on the latch that blocks the latch from being pulled out of the through-hole. This prevents the latch from being lost.

In a preferred embodiment the endcap has a protruding part that protrudes in a protruding direction (X) from surrounding parts of the endcap. In a preferred embodiment, the surrounding parts of the endcap that surround the protruding part have an outward facing surface that is arranged in a plane, whereby the protruding part protrudes outward from said plane into the protruding direction.

In a preferred embodiment the protruding direction is the center axis of the filter element. In a preferred embodiment the protruding part is arranged in the center of a top surface of the endcap.

In a preferred embodiment, the protruding part has only one recess. In an alternative embodiment, the protruding part has several recesses.

In a preferred embodiment, the recess of the protruding part extends along a direction that is perpendicular to a plane that contains the protruding direction. In a preferred embodiment the recess extends radially through parts of the protruding part.

In a preferred embodiment, the protruding part is arranged on an outside surface of the endcap and the recess is arranged in the protruding part and the endcap is a closed endcap. In a preferred embodiment there is no fluid path from the inside of the recess through the endcap into the inside of the filter media.

According to the method for assembly of a filter assembly according to the invention, the filter element is inserted into the housing, the filter element is rotated inside the housing, if the recess is not in alignment with the through-hole to bring the recess into alignment with the through hole and finally the latch is moved into the locking position.

The filter assembly according to the invention can have a safety filter element with a sealing component that is suitable to seal against the main filter element and a housing sealing component that is suitable to seal against the housing. Hence, instead of providing the main filter element with a seal that seals against the safety filter element, according to the invention, the safety filter element has one sealing component that seals against the main filter element.

In a preferred embodiment at least one safety filter element endcap can be provided, whereby the safety filter element endcap comprises a safety filter element circumferential support structure, whereby a sealing component is arranged on the safety filter element circumferential support structure and extends along the safety filter element circumferential support structure, and to provide the safety filter element endcap additionally with a housing sealing component.

A filter element that is designed in such a manner can be used to seal against a main filter element, especially in embodiments where the safety filter element is arranged at least partially inside the main filter element. Hence, for those designs, where a safety filter element is at least partially arranged inside a main filter element, the sealing component that can be used to seal the main filter element against the safety filter element is provided on the safety element and remains with the safety filter element, even if the main filter element is exchanged.

This makes use of the idea that a sealing component that seals a main filter element against a safety filter element can be made of material that is much more longer lasting than the main filter media. This is based on the concept that in typical use cases, the main filter media and hence the main filter element needs to be exchanged more frequently than the sealing component. Typically, the main filter element needs to be exchanged because of the main filter media being defective or being clogged up much earlier than would be the need to exchange the sealing component. Typically, a sealing component is much more longer lasting than a main filter media. This now works with the concept to place the sealing component that seals the main filter element against the safety filter element on the safety filter element rather than on the main filter element. In doing so, the sealing component remains with the safety filter element in the filter assembly even in the situations, where the main filter element needs to be exchanged. This has cost advantages and ecological advantages. In the prior art, where the sealing component is arranged on the main filter element, a well functional sealing component is exchanged and typically thrown away with the main filter element, because the main filter media has reached its maximum lifetime. The sealing component in these situations typically is, however, still functional and would not have needed to be exchanged. Hence, in the prior art, sealing components that are still well functional are being thrown away, which leads to higher costs and is less ecological. This does away with these problems, because it allows the sealing component to be used longer, as the sealing component remains in the filter assembly together with the safety filter element.

The safety filter element extends along a longitudinal axis. In a preferred embodiment, the longitudinal axis is an axis of symmetry for at least one element that makes up the safety filter element, for example for a safety filter media. However, designs are also feasible, where the longitudinal axis is not an axis of symmetry for any of the elements that make up the safety filter element.

The safety filter element according to one aspect comprises a safety filter media. This filter media at least partially surrounds a safety filter media inner space. In a preferred embodiment, the safety filter media extends between first and second opposite media ends and. First media end may be engaged by a first end piece (e.g., endcap). The second media end may be engaged by a second end piece (e.g., endcap). Thus, the safety filter media may extend between opposite end caps (e.g., end pieces). The safety filter media can be pleated media, although alternatives are possible. The safety filter media can be configured in a cylindrical pattern, although alternatives are possible. For example, the safety filter media can be somewhat conical in extension between the opposite ends. Also, the safety filter media can be configured with non-circular inner and/or outer perimeters; for example oblong, oval or other cross-sectional configurations are possible. In some embodiments, the safety filter media is arranged around a central plenum to achieve these various configurations.

In a preferred embodiment, for example in a cylindrical pleated safety filter element, the flow generally makes a substantial turn as its passes into and out of the safety filter media. That is, the flow enters the cylindrical safety filter element through a cylindrical side, and then turns to exit through an open end of the safety filter media (in forward-flow systems). In a typical reverse-flow system, the flow enters the cylindrical pleated safety filter element through an open end of the safety filter media and then turns to exit through a side of the cylindrical filter media.

The safety filter media can be provided as any type of media, such as media commonly used in secondary filter elements. Exemplary media include pleated and non-pleated media (such as non-woven media) and multilayer laminate.

In a preferred embodiment, the safety filter media has the shape of a hollow cylinder or a hollow truncated cone. In a preferred embodiment, the safety filter media surrounds the safety filter media inner space at the sides, while the safety filter media inner space is delimited at the top by a safety filter element endcap and/or is delimited at the bottom by a safety filter element endcap. In a preferred embodiment the safety filter media inner space is delimited at the top by a closed safety filter element endcap and is delimited at the bottom by a safety filter element endcap that has an outlet opening.

The main filter element used as part of the filter system and/or the filter assembly comprises a main filter media. In a preferred embodiment, the main filter media extends between first and second opposite media ends and. First media end may be engaged by a first end piece (e.g., endcap). The second media end may be engaged by a second end piece (e.g., endcap). Thus, the main filter media may extend between opposite end caps (e.g., end pieces). The main filter media can be pleated media, although alternatives are possible. The main filter media can be configured in a cylindrical pattern, although alternatives are possible. For example, the main filter media can be somewhat conical in extension between the opposite ends. Also, the main filter media can be configured with non-circular inner and/or outer perimeters; for example oblong, oval or other cross-sectional configurations are possible. In some embodiments, the main filter media is arranged around a central plenum to achieve these various configurations.

In a preferred embodiment, for example in a cylindrical pleated main filter element, the flow generally makes a substantial turn as its passes into and out of the main filter media. That is, the flow enters the cylindrical main filter element through a cylindrical side, and then turns to exit through an open end of the main filter media (in forward-flow systems). In a typical reverse-flow system, the flow enters the cylindrical pleated main filter element through an open end of the main filter media and then turns to exit through a side of the cylindrical filter media.

The main filter media can be provided as any type of media, such as media commonly used in secondary filter elements. Exemplary media include pleated and non-pleated media (such as non-woven media) and multilayer laminate.

In a preferred embodiment the safety filter media and the main filter media are made from the same material. In an alternative, the safety media and the main filter media are made from different material. The difference in material may be
- a difference in the chemical composition, while other parameters like density or porosity or number of layers may be the same or may be different;
- a difference in the number of layers, while other parameters like density or porosity or chemical composition may be the same or may be different;
- a difference in the density, while other parameters like number of layers or porosity or chemical composition may be the same or may be different;
- a difference in porosity, while other parameters like density or number of layers or chemical composition may be the same or may be different.

In a preferred embodiment, the safety filter media is comprises fibers and the main filter media comprises fibers and the difference in chemical composition is achieved by way of choosing different fibers for the safety filter media and the main filter media.

In a preferred embodiment, the safety filter media comprises a pleated filter media and the main filter media comprises a pleated filter media, whereby the difference in material is obtained either solely or possibly in combination with other differences by a difference in pleat depth and/or pleat count and/or pleat spacers.

In a preferred embodiment, the main filter media has the shape of a hollow cylinder or a hollow truncated cone.

The safety filter element according preferably has a safety filter element circumferential support structure. The term "circumferential support structure" is understood to refer to a support structure that is a closed-loop in any shape or form. Starting from any point on a circumferential support structure, one can follow a path along the circumferential support structure to then return to the starting point. In a preferred embodiment, starting from any point on the safety filter element circumferential support structure, one can follow a path along the safety filter element circumferential support structure said path circulating around an axis of the safety filter element, which axis does not dissect the safety filter element circumferential support structure to then return to the starting point. Preferably the axis is the longitudinal axis of the safety filter element.

In a preferred embodiment the safety filter element circumferential support structure is a safety filter element circumferential surface. The term "circumferential surface" is understood to refer to a surface that is a closed-loop in any shape or form. Starting from any point on a circumferential surface, one can follow a path along the circumferential surface to then return to the starting point. In a preferred embodiment, starting from any point on the safety filter element circumferential surface, one can follow a path along the safety filter element circumferential surface said path circulating around an axis of the safety filter element, which axis does not dissect the safety filter element circumferential surface to then return to the starting point. Preferably the axis is the longitudinal axis of the safety filter element.

This description speaks of a safety filter element circumferential support structure, because embodiments are feasible, where the sealing component that is arranged on the safety filter element circumferential support structure and extends along the safety filter element circumferential support structure can not be lifted of the safety filter element circumferential support structure to reveal a surface. This is the case for embodiments where the sealing component has been glued or welded onto the safety filter element circumferential support structure. This is however also the case in embodiments where the safety filter element circumferential support structure and the sealing component have been produced by way of co-injection, especially by way of 2k injection molding (two-shot injection). In such an embodiment the safety filter element circumferential support structure is provided by injecting a first material into the mould, while the sealing component is provided by injecting a second material into the mould. In such an embodiment, the safety filter element circumferential support structure and the sealing component can be identified by dissecting the endcap. The material transition between the material that forms the safety filter element circumferential support structure and the material that forms the sealing component will become visible in the cross section. Typically the material used for the safety filter element circumferential support structure has the higher shore strength compared to the material that is used for the sealing component.

In order to better describe the possible geometric shapes of the safety filter element circumferential surface, the safety filter element circumferential surface is described to comprise several surface sections. This way of describing the safety filter element circumferential surface is simply used as a means to describe the possible shapes of the safety filter element circumferential surface. The reference to surface sections does not necessarily mean that the individual surface sections are distinguishable elements of the safety filter element circumferential surface. While such designs are feasible, it is not necessary for a surface section to terminate in an edge, a latch, a ridge, a crest or any other clearly distinguishable object that distinguishes a first surface section from a second, neighbouring surface section. Embodiments are also feasible, where the safety filter element circumferential surface is described to comprise several surface sections, but where these surface sections are not distinguishable from one another, for example in cases where the safety filter element circumferential surface has the shape of the outer surface of a cylinder, which can be said to be made up of a multitude, possibly even an infinite number of surface sections that are not distinguishable from one another. The same rationale goes for a safety filter element circumferential surface that has the shape of the outward facing surface of a truncated cone, which also is a possible embodiment for a safety filter element circumferential surface.

In other embodiments of the safety filter element circumferential surface, at least one surface section is, however, clearly distinguishable from other surface sections. This might be the case, because the specific surface section terminates in a ridge with a neighbouring surface section terminating at the same ridge. Alternatively, a surface section might become distinguishable, because the terminal line that is understood to be the line that describes the one end of the surface section has a discrete change in its shape, for example a kink.

The shape of the safety filter element circumferential surface preferably is chosen in view of the sealing component that is provided to extend along the safety filter element circumferential surface. Especially, the safety filter element circumferential surface can be chosen in its shape to corporate with a sealing component that is intended to primarily function as a radial seal. If the sealing component is chosen to primarily function as an axial seal, the shape of the safety filter element circumferential surface can be adapted appropriately.

At least one of the surface sections can be arranged such that the normal vector to the surface section is orientated either along the axis or parallel to the axis or arranged to point to the outside of the safety filter element. The normal vector is a vector that starts on the surface section and is orientated perpendicular to the surface section. A normal vector that points to the outside of the safety filter element is considered to be a vector that starting from the surface of the surface section extends to the outside of the safety filter element and does not pass through the filter element to the opposite side of the filter element.

In a preferred embodiment, the majority of the surface sections that make up the safety element circumferential surface are arranged such that a normal vector to the respective surface section is orientated either along the axis or parallel to the axis or arranged to point to the outside of the safety filter element. In a preferred embodiment, the overwhelming majority of the surface sections (more than 75%) that make up the safety element circumferential surface are arranged such that a normal vector to the respective surface section is orientated either along the axis or parallel to the axis or arranged to point to the outside of the safety filter element.

In a preferred embodiment, the safety filter element circumferential surface is provided by a circular ring-shaped surface that is arranged in a plane that is perpendicular to the longitudinal axis of the safety filter element. The circular ring-shaped safety filter element circumferential surface preferably is arranged as a ring around the longitudinal axis. If a sealing component is provided to extend along such a safety filter element circumferential surface, the sealing component would preferably be used to work as an axial seal. Such a circular circumferential ring-shaped safety filter element circumferential surface can for example be provided by a ring-shaped wall or rim that protrudes radially over other parts of the safety filter element. Such a design provides additional advantages, because the opposite side of such a circumferential wall or rim, that likewise could be circular and ring-shaped and is pointing in the opposite direction, can be used to provide a housing sealing component to extend along this surface, which housing sealing component in this design could also work as an axial seal. In such a design, all surface sections of the safety filter element circumferential surface would be arranged such that the normal vector to the respective surface section is orientated parallel to the axis of the safety filter element.

As a modification of the above described design, the radially extending circumferential wall or rim can be adapted to have a surface section that is offset from the remainder of the wall/rim in the direction of the axis of the safety filter element. In such a design, several surface sections that make up the safety filter element circumferential surface would be arranged in the same plane, while a further surface section would for example be arranged in a different, but parallel plane, while a first angled surface section would connect the several surface sections with the one, offset surface section on the one side, while a second angled surface section would connect the several surface sections and the one, offset surface section on the other side. The angled surface sections would hence appear like a ramp leading from the plane in which the several surface sections are arranged up to the offset surface section on the one side and down from the offset surface section back to the plane, in which the several surface sections are arranged. In such a design, the several surface sections would each be arranged such that the normal vector to the respective surface section is orientated parallel to the axis. The surface section that is offset from the several surface sections would also be a surface section that is arranged such that the normal vector to this offset surface section is orientated parallel to the axis. Only the angularly arranged surface sections would not be arranged such that their respective normal vector would be arranged parallel to the axis. Their normal vector would be orientated at an angle to a plane that contains the axis.

If in the above-described design the offset surface section is considered to be a peak and if several such peaks are provided as part of the safety filter element circumferential surface, the safety filter element circumferential surface can be described to be undulating between peaks and valleys with angular orientated surface sections arranged between the peaks and the valleys. The maximum peak-valley-structure would be a wave-like structure, where the respective surface section on the peak, that has a normal vector parallel to the axis becomes infinitesimally small and the surface section that forms the valley and also has a normal vector that is parallel to the axis also becomes infinitesimally small.

In a preferred embodiment, the peak-valley-design or the wave design can be made symmetrical in the sense that the peaks/tip of the waves are distributed at equal distance around the safety filter element circumferential surface. In a preferred embodiment, the safety filter element circumferential surface forms a contour shape with a single fold rotational symmetry. In such a design, only one hill (peak) would be provided for example or if several hills (peaks) are provided, they would be distributed around the safety filter element circumferential surface at unequal distances.

In an alternative, the safety filter element circumferential surface would be designed to work together with a sealing component that extends along the safety filter element circumferential surface and is intended to be used primarily as a radial seal. In such a design, at least one surface section of the safety filter element circumferential surface would be arranged such that the normal vector to the surface section is orientated to point to the outside of the safety filter element, preferably to point radially outward from the safety filter element. In a preferred embodiment, the safety filter element circumferential surface is made up of surface sections that each form part of the outside surface of a cylinder. In the most simple way, all surface sections would be arranged at the same height of the cylinder making the safety filter element circumferential surface a ring-shaped surface on the outside of a cylinder.

As a modification of the above-described design, a safety filter element circumferential surface that is ring-shaped surface on the outside of a cylinder can be adapted to have a surface section that is offset from the remainder of surface sections in the direction of the axis of the safety filter element. In such a design, several surface sections that make up the safety filter element circumferential surface would be arranged to form a part of a ring-shaped surface on the outside of a cylinder, while a further surface section would for example be arranged to form a part of a different ring-shaped surface on the outside of the cylinder, while a first angled surface section would connect the several surface sections with the one, offset surface section on the one side, while a second angled surface section would connect the several surface sections and the one, offset surface section on the other side. The angled surface sections would hence appear like a ramp leading from the ring on which the several surface sections are arranged up to the offset surface section on the one side and down from the offset surface section back to the ring, in which the several surface sections are arranged. In such a design, all normal vectors to the respective surface section would be orientated to point to the outside of the safety filter element.

If in the above-described design the offset surface section is considered to be a peak, and if several such peaks are provided as part of the safety filter element circumferential surface, the safety filter element circumferential surface can be described to be undulating between peaks and valleys with angular orientated surface sections arranged between the peaks and the valleys. The maximum peak-valley-structure would be a wave-like structure, where the respective surface section on the peak becomes infinitesimally small and the surface section that forms the valley also becomes infinitesimally small.

In a preferred embodiment, the peak-valley-design or the wave design can be made symmetrical in the sense that the peaks/tip of the waves are distributed at equal distance around the safety filter element circumferential surface. In a preferred embodiment, the safety filter element circumferential surface forms a contour shape with a single fold rotational symmetry. In such a design, only one hill (peak) would be provided for example or if several hills (peaks) are provided, they would be distributed around the safety filter element circumferential surface at unequal distances.

In a preferred embodiment, the several surface sections that make up the safety filter element circumferential surface are arranged in the same plane, such that the safety filter element circumferential surface is arranged in said plane.

In a preferred embodiment, the several surface sections that make up the safety filter element circumferential surface are designed to jointly form the outer surface of a cone, such that the safety filter element circumferential surface is designed to form the outer surface of a cone.

In a preferred embodiment, the several surface sections that make up the safety filter element circumferential surface are designed to jointly form the outer surface of a cylinder, such that the safety filter element circumferential surface is designed to form the outer surface of a cylinder.

In a preferred embodiment, the several surface sections that make up the safety filter element circumferential surface are designed to jointly form the outer surface of a cylinder that has a triangular or quadratic or pentagonial, hexagonial, heptagonial octagonial, polygonial, preferably polygonial but symmetrical cross-section cylinder.

In a preferred embodiment, a first surface section that belongs to the several surface sections that make up the safety filter element circumferential surface is arranged in a plane, such that at least that part of the safety filter element circumferential surface that is made up of the first surface section is arranged in said plane and a second surface section that belongs to the several surface sections that make up the safety filter element circumferential surface is arranged in a different plane.

In a preferred embodiment, a first surface section that belongs to the several surface sections that make up the safety filter element circumferential surface is designed to form a section of the outer surface of a cone, such that at least that part of the safety filter element circumferential surface that is made up of the first surface section is designed to form a section of the outer surface of a cone, and a second surface section that belongs to the several surface sections that make up the safety filter element circumferential surface is designed to form a section of the outer surface of a different cone.

In a preferred embodiment, a first surface section that belongs to the several surface sections that make up the safety filter element circumferential surface is designed to form a section of the outer surface of a cylinder, such that at least that part of the safety filter element circumferential surface that is made up of the first surface section is designed to form a section of the outer surface of a cylinder, and a second surface section that belongs to the several surface sections that make up the safety filter element circumferential surface is designed to form a section of the outer surface of a different cylinder.

For surface sections that are not flat but curved, the respective surface section is considered to be arranged such that the normal vector is orientated to point to the outside of the safety filter element, especially radially outward from the safety filter element, if the normal vector to at least one infinitesimally small subsection of such a surface section is orientated to point to the outside of the safety filter element.

Safety filter element circumferential surfaces can also be designed such that several surface sections, preferably the majority of the surface sections, preferably all surface sections that make up the safety filter element circumferential surface, are arranged in the same plane. Safety filter element circumferential surfaces can also be designed such that several surface sections, preferably the majority of the surface sections, preferably all surface sections that make up the safety filter element circumferential surface, are arranged on the outside surface of a cylinder, preferably at the same height. Safety filter element circumferential surfaces can also be designed such that several surface sections, preferably the majority of the surface sections, preferably all surface sections that make up the safety filter element circumferential surface, are arranged on a cone.

According to one embodiment, at least one sealing component extends along the safety filter element circumferential surface. This sealing component is a circumferential object, which is understood to refer to an object that is a closed loop, whereby starting from any point on said object, one can follow a path along said object to then return to the starting point, especially one can follow a path along said object circulating around an axis of the safety filter element, which axis does not dissect the object to then return to the starting point, the axis preferably being the longitudinal axis of the safety filter element.

The sealing component can be provided by material that is attached to the safety filter element circumferential surface. The sealing component hence does not need to be a standalone or independent object. While the sealing component can, for example, be an O-ring and hence would be a standalone, independent object, a sealing component that is provided by sealing material being attached to the safety filter element circumferential surface, for example sealing material galvanized onto the safety filter element circumferential surface would not be considered to be a standalone, independent object.

The sealing component can be a PU (polyurethan) seal, which in its sealing state preferably is compressed. The PU seal could be overmolded over a structure, for example an endcap. The overmolding can take place by way of potting. Also TPE (thermoplastic elastomer) seals, Thixo seals (silicone) could be used. Also seal using the material FERMAPOR K31-A-9308-5-VP5 / K31-B-4 from Sonderhof / Henkel can be used.

The sealing component can be part of a larger object. In a preferred embodiment, the sealing component is part of a sleeve-like element, in which certain parts of the sleeve make up the sealing component, while in a preferred embodiment, other parts can make up a further sealing component, for example a housing sealing component.

In a preferred embodiment, the safety filter element has a first safety filter element circumferential surface as described above and has a second safety filter element circumferential surface, whereby a first sealing component extends along the first safety filter element circumferential surface and a second sealing component extends along the second safety filter element circumferential surface. The first sealing component and the second sealing component can be parts of the same standalone, independent object, for example of a sleeve. In such a design, the first sealing component can be used as an axial seal, while the second sealing component could be used as a radial seal.

The sealing component can be attached to the safety filter element circumferential surface by being galvanized to it, by way of being glued to it, by way of being welded to it. The sealing component, especially if it is a standalone, independent elastic object can hold itself to the safety filter element circumferential surface by way of its resilience. If the sealing component is, for example, provided by an O-ring, the resilience of the O-ring could hold the O-ring to the safety filter element circumferential surface.

The safety filter element circumferential surface can be provided with a groove, especially with a circumferential groove and the sealing component, especially if it is a standalone, independent object, can be arranged partially inside the groove. For example, an O-ring can be arranged to be partially inside a groove.

In a preferred embodiment, the sealing component is a lip seal. Preferably, the lip seal comprises a thermoplastic elastomer (TPE) or another flexible material suitable for providing the effect of sealing. Generally, the sealing direction of a lip seal on a filter element corresponds to the direction of the dominant component selected from the radial and axial components of the lip.

Preferably, the lip seal comprises an elongate base, having a front and a back surface, and an elongate lip structure or lip extending from the front surface of the base. Preferably, it comprises a T-shaped transversal cross-section. The base is preferably planar in nature and makes an angle with the lip. The angle is preferably within the range of 30° to 90°. The angle is more preferably close to 90°, for instance within the range of 75° to 89°. According to preferred embodiment, the lip forms an oblique angle with respect to the axis of the safety filter element. This "symmetry-breaking" bias of the lip seal causes the lip seal to move in the right direction in use, for the lip seal to be optimally resistant to a difference in air pressure to which it is typically exposed. According to preferred embodiments, wherein the support structure comprises a smooth, continuous, band surface that follows the seal, the base of the lip seal is preferably attached to the band surface. Preferably, it is in direct or indirect contact with said band surface. The base of the lip seal is preferably substantially parallel or parallel to the smooth, continuous, band surface that follows it. In such embodiments, the angle between the lip and the band surface preferably corresponds to the angle between the lip and the base.

According to preferred embodiments, the angle between the lip seal and the base is constant along the closed loop trajectory. According to alternative embodiments, the angle between the lip seal and the base is not constant along the closed loop trajectory.

In a preferred embodiment, in addition to the one sealing component, a housing sealing component is provided on the safety filter element. In a preferred embodiment, the safety filter element has a housing sealing element circumferential surface.

In a preferred embodiment the housing sealing component is arranged on and extends along a housing sealing element circumferential support structure. The term "circumferential support structure" is understood to refer to a support structure that is a closed-loop in any shape or form. Starting from any point on a circumferential support structure, one can follow a path along the circumferential support structure to then return to the starting point. In a preferred embodiment, starting from any point on the safety filter element circumferential support structure, one can follow a path along the safety filter element circumferential support structure said path circulating around an axis of the safety filter element, which axis does not dissect the safety filter element circumferential support structure to then return to the starting point. Preferably the axis is the longitudinal axis of the safety filter element.

In a preferred embodiment the housing sealing element circumferential support structure is a housing sealing element circumferential surface. The term "circumferential surface" is understood to refer to a surface that is a closed-loop in any shape or form. Starting from any point on a circumferential surface, one can follow a path along the circumferential surface to then return to the starting point. In a preferred embodiment, starting from any point on the safety filter element circumferential surface, one can follow a path along the safety filter element circumferential surface said path circulating around an axis of the safety filter element, which axis does not dissect the safety filter element circumferential surface to then return to the starting point. Preferably the axis is the longitudinal axis of the safety filter element.

This description speaks of a housing sealing element circumferential support structure, because embodiments are feasible, where the housing sealing component that is arranged on the housing sealing element circumferential support structure and extends along the housing sealing element circumferential support structure can not be lifted of the housing sealing element circumferential support structure to reveal a surface. This is the case for embodiments where the housing sealing component has been glued or welded onto the housing sealing element circumferential support structure. This is however also the case in embodiments where the housing sealing element circumferential support structure and the housing sealing component have been produced by way of co-injection, especially by way of 2k injection molding (two-shot injection). In such an embodiment the housing sealing element circumferential support structure is provided by injecting a first material into the mould, while the housing sealing component is provided by injecting a second material into the mould. In such an embodiment, the housing sealing element circumferential support structure and the housing sealing component can be identified by dissecting the endcap. The material transition between the material that forms the housing sealing element circumferential support structure and the material that forms the sealing component will become visible in the cross section. Typically the material used for the housing sealing element circumferential support structure has the higher shore strength compared to the material that is used for the housing sealing component.

In order to better describe the possible geometric shapes of the housing sealing element circumferential surface according to one aspect the housing sealing element circumferential surface is described to comprise several surface sections. This way of describing the housing sealing element circumferential surface is simply used as a means to describe the possible shapes of the housing sealing element circumferential surface. The reference to surface sections does not necessarily mean that the individual surface sections are distinguishable elements of the housing sealing element circumferential surface. While such designs are feasible, it is not necessary for a surface section to terminate in an edge, a latch, a ridge, a crest or any other clearly distinguishable object that distinguishes a first surface section from a second, neighbouring surface section. Embodiments are also feasible, where the housing sealing element circumferential surface is described to comprise several surface sections, but where these surface sections are not distinguishable from one another, for example in cases where the housing sealing element circumferential surface has the shape of the outer surface of a cylinder, which can be said to be made up of a multitude, possibly even an infinite number of surface sections that are not distinguishable from one another. The same rationale goes for a housing sealing element circumferential surface that has the shape of the outward facing surface of a truncated cone, which also is a possible embodiment for a housing sealing element circumferential surface.

In other embodiments of the housing sealing element circumferential surface, at least one surface section is, however, clearly distinguishable from other surface sections. This might be the case, because the specific surface section terminates in a ridge with a neighbouring surface section terminating at the same ridge. Alternatively, a surface section might become distinguishable, because the terminal line that is understood to be the line that describes the one end of the surface section has a discrete change in its shape, for example a kink.

The shape of the housing sealing element circumferential surface preferably is chosen in view of the housing sealing component that is provided to extend along the housing sealing element circumferential surface. Especially, the housing sealing element circumferential surface can be chosen in its shape to corporate with a housing sealing component that is intended to primarily function as a radial seal. If the housing sealing component is chosen to primarily function as an axial seal, the shape of the housing sealing element circumferential surface can be adapted appropriately.

At least one of the surface sections can be arranged such that the normal vector to the surface section is orientated either along the axis or parallel to the axis or arranged to point to the outside of the safety filter element. The normal vector is a vector that starts on the surface section and is orientated perpendicular to the surface section. A normal vector that points to the outside of the safety filter element is considered to be a vector that starting from the surface of the surface section extends to the outside of the safety filter element and does not pass through the filter element to the opposite side of the filter element.

In a preferred embodiment, the majority of the surface sections that make up the safety element circumferential surface are arranged such that a normal vector to the respective surface section is orientated either along the axis or parallel to the axis or arranged to point to the outside of the safety filter element. In a preferred embodiment, the overwhelming majority of the surface sections (more than 75%) that make up the safety element circumferential surface are arranged such that a normal vector to the respective surface section is orientated either along the axis or parallel to the axis or arranged to point to the outside of the safety filter element.

In a preferred embodiment, the housing sealing element circumferential surface is provided by a circular ring-shaped surface that is arranged in a plane that is perpendicular to the axis of the safety filter element. The circular ring-shaped housing sealing element circumferential surface preferably is arranged as a ring around the axis. If a housing sealing component is provided to extend along such a housing sealing element circumferential surface, the housing sealing component would preferably be used to work as an axial seal. Such a circular circumferential ring-shaped housing sealing element circumferential surface can for example be provided by a ring-shaped wall or rim that protrudes radially over other parts of the safety filter element. Such a design provides additional advantages, because the opposite side of such a circumferential wall or rim, that likewise could be circular and ring-shaped and is pointing in the opposite direction, can be used to provide a sealing component to extend along this surface, which sealing component in this design could also work as an axial seal. In such a design, all surface sections of the housing sealing element circumferential surface would be arranged such that the normal vector to the respective surface section is orientated parallel to the axis of the safety filter element.

As a modification of the above described design, the radially extending circumferential wall or rim can be adapted to have a surface section that is offset from the remainder of the wall/rim in the direction of the axis of the safety filter element. In such a design, several surface sections that make up the housing sealing element circumferential surface would be arranged in the same plane, while a further surface section would for example be arranged in a different, but parallel plane, while a first angled surface section would connect the several surface sections with the one, offset surface section on the one side, while a second angled surface section would connect the several surface sections and the one, offset surface section on the other side. The angled surface sections would hence appear like a ramp leading from the plane in which the several surface sections are arranged up to the offset surface section on the one side and down from the offset surface section back to the plane, in which the several surface sections are arranged. In such a design, the several surface sections would each be arranged such that the normal vector to the respective surface section is orientated parallel to the axis. The surface section that is offset from the several surface sections would also be a surface section that is arranged such that the normal vector to this offset surface section is orientated parallel to the axis. Only the angularly arranged surface sections would not be arranged such that their respective normal vector would be arranged parallel to the axis. Their normal vector would be orientated at an angle to a plane that contains the axis.

If in the above-described design the offset surface section is considered to be a peak and if several such peaks are provided as part of the housing sealing element circumferential surface, the housing sealing element circumferential surface can be described to be undulating between peaks and valleys with angular orientated surface sections arranged between the peaks and the valleys. The maximum peak-valley-structure would be a wave-like structure, where the respective surface section on the peak, that has a normal vector parallel to the axis becomes infinitesimally small and the surface section that forms the valley and also has a normal vector that is parallel to the axis also becomes infinitesimally small.

In a preferred embodiment, the peak-valley-design or the wave design can be made symmetrical in the sense that the peaks/tip of the waves are distributed at equal distance around the housing sealing element circumferential surface. In a preferred embodiment, the housing sealing element circumferential surface forms a contour shape with a single fold rotational symmetry. In such a design, only one hill (peak) would be provided for example or if several hills (peaks) are provided, they would be distributed around the housing sealing element circumferential surface at unequal distances.

In an alternative, the housing sealing element circumferential surface would be designed to work together with a housing sealing component that extends along the housing sealing element circumferential surface and is intended to be used primarily as a radial seal. In such a design, at least one surface section of the housing sealing element circumferential surface would be arranged such that the normal vector to the surface section is orientated to point to the outside of the safety filter element, preferably to point radially outward from the safety filter element. In a preferred embodiment, the housing sealing element circumferential surface is made up of surface sections that each form part of the outside surface of a cylinder. In the most simple way, all surface sections would be arranged at the same height of the cylinder making the housing sealing element circumferential surface a ring-shaped surface on the outside of a cylinder.

As a modification of the above-described design, a housing sealing element circumferential surface that is ring-shaped surface on the outside of a cylinder can be adapted to have a surface section that is offset from the remainder of surface sections in the direction of the axis of the safety filter element. In such a design, several surface sections that make up the housing sealing element circumferential surface would be arranged to form a part of a ring-shaped surface on the outside of a cylinder, while a further surface section would for example be arranged to form a part of a different ring-shaped surface on the outside of the cylinder, while a first angled surface section would connect the several surface sections with the one, offset surface section on the one side, while a second angled surface section would connect the several surface sections and the one, offset surface section on the other side. The angled surface sections would hence appear like a ramp leading from the ring on which the several surface sections are arranged up to the offset surface section on the one side and down from the offset surface section back to the ring, in which the several surface sections are arranged. In such a design, all normal vectors to the respective surface section would be orientated to point to the outside of the safety filter element.

If in the above-described design the offset surface section is considered to be a peak, and if several such peaks are provided as part of the housing sealing element circumferential surface, the housing sealing element circumferential surface can be described to be undulating between peaks and valleys with angular orientated surface sections arranged between the peaks and the valleys. The maximum peak-valley-structure would be a wave-like structure, where the respective surface section on the peak becomes infinitesimally small and the surface section that forms the valley also becomes infinitesimally small.

In a preferred embodiment, the peak-valley-design or the wave design can be made symmetrical in the sense that the peaks/tip of the waves are distributed at equal distance around the housing sealing element circumferential surface. In a preferred embodiment, the housing sealing element circumferential surface forms a contour shape with a single fold rotational symmetry. In such a design, only one hill (peak) would be provided for example or if several hills (peaks) are provided, they would be distributed around the housing sealing element circumferential surface at unequal distances.

In a preferred embodiment, the several surface sections that make up the housing sealing element circumferential surface are arranged in the same plane, such that the housing sealing element circumferential surface is arranged in said plane.

In a preferred embodiment, the several surface sections that make up the housing sealing element circumferential surface are designed to jointly form the outer surface of a cone, such that the housing sealing element circumferential surface is designed to form the outer surface of a cone.

In a preferred embodiment, the several surface sections that make up the housing sealing element circumferential surface are designed to jointly form the outer surface of a cylinder, such that the housing sealing element circumferential surface is designed to form the outer surface of a cylinder.

In a preferred embodiment, a first surface section that belongs to the several surface sections that make up the housing sealing element circumferential surface is arranged in a plane, such that at least that part of the housing sealing element circumferential surface that is made up of the first surface section is arranged in said plane and a second surface section that belongs to the several surface sections that make up the housing sealing element circumferential surface is arranged in a different plane.

In a preferred embodiment, a first surface section that belongs to the several surface sections that make up the housing sealing element circumferential surface is designed to form a section of the outer surface of a cone, such that at least that part of the housing sealing element circumferential surface that is made up of the first surface section is designed to form a section of the outer surface of a cone, and a second surface section that belongs to the several surface sections that make up the housing sealing element circumferential surface is designed to form a section of the outer surface of a different cone.

In a preferred embodiment, a first surface section that belongs to the several surface sections that make up the housing sealing element circumferential surface is designed to form a section of the outer surface of a cylinder, such that at least that part of the housing sealing element circumferential surface that is made up of the first surface section is designed to form a section of the outer surface of a cylinder, and a second surface section that belongs to the several surface sections that make up the housing sealing element circumferential surface is designed to form a section of the outer surface of a different cylinder.

For surface sections that are not flat but curved, the respective surface section is considered to be arranged such that the normal vector is orientated to point to the outside of the safety filter element, especially radially outward from the safety filter element, if the normal vector to at least one infinitesimally small subsection of such a surface section is orientated to point to the outside of the safety filter element.

Housing sealing element circumferential surfaces can also be designed such that several surface sections, preferably the majority of the surface sections, preferably all surface sections that make up the housing sealing element circumferential surface, are arranged in the same plane. Housing sealing element circumferential surfaces can also be designed such that several surface sections, preferably the majority of the surface sections, preferably all surface sections that make up the housing sealing element circumferential surface, are arranged on the outside surface of a cylinder, preferably at the same height. Housing sealing element circumferential surfaces can also be designed such that several surface sections, preferably the majority of the surface sections, preferably all surface sections that make up the housing sealing element circumferential surface, are arranged on a cone.

At least one housing sealing component can extend along the housing sealing element circumferential surface. This housing sealing component is a circumferential object, which is understood to refer to an object that is a closed loop, whereby starting from any point on said object, one can follow a path along said object to then return to the starting point, especially one can follow a path along said object circulating around an axis of the safety filter element, which axis does not dissect the object to then return to the starting point, the axis preferably being the longitudinal axis of the safety filter element.

The housing sealing component can be provided by material that is attached to the housing sealing element circumferential surface. The housing sealing component hence does not need to be a standalone or independent object. While the housing sealing component can, for example, be an O-ring and hence would be a standalone, independent object, a housing sealing component that is provided by sealing material being attached to the housing sealing element circumferential surface, for example sealing material galvanized onto the housing sealing element circumferential surface would not be considered to be a standalone, independent object.

The housing sealing component can be a PU (polyurethan) seal, which in its sealing state preferably is compressed. The PU seal could be overmolded over a structure, for example an endcap. The overmolding can take place by way of potting. Also TPE (thermoplastic elastomer) seals, Thixo seals (silicone) could be used. Also seal using the material FERMAPOR K31-A-9308-5-VP5 / K31-B-4 from Sonderhof / Henkel can be used.

The housing sealing component can be part of a larger object. In a preferred embodiment, the housing sealing component is part of a sleeve-like element, in which certain parts of the sleeve make up the housing sealing component, while in a preferred embodiment, other parts can make up a further sealing component, for example a sealing component to seal against the main filter element.

In a preferred embodiment, the safety filter element has a first housing sealing element circumferential surface as described above and has a second housing sealing element circumferential surface, whereby a first housing sealing component extends along the first housing sealing element circumferential surface and a second housing sealing component extends along the second housing sealing element circumferential surface. The first housing sealing component and the second housing sealing component can be parts of the same standalone, independent object, for example of a sleeve. In such a design, the first housing sealing component can be used as an axial seal, while the second housing sealing component could be used as a radial seal.

In a preferred embodiment, the safety filter element endcap has circular rim that encircles the longitudinal axis of the safety filter element, whereby
- the safety filter element circumferential support structure is provided above the circular rim or on an upward facing surface of the rim and
- the housing sealing element circumferential support structure is provided below the circular rim or on a downward facing surface of the rim.

In a preferred embodiment, the safety filter element has a safety filter element endcap that is arranged on one end of the safety filter media, wherein a safety filter element circumferential surface, preferably the safety filter element circumferential surface described above by way of the several surface sections, but possible also a differently designed safety filter element circumferential surface is arranged on the safety filter element endcap. In a preferred embodiment the safety filter media has a safety filter media inner space and the safety filter element endcap has an outlet opening that leads to the safety filter media inner space. In a preferred embodiment, the safety filter element only has one outlet opening that leads to the safety filter media inner space.

In a preferred embodiment, the safety filter media has a safety filter media inner space, whereby a safety filter element endcap is provided that has an outlet opening that leads to the safety filter media inner space. In a preferred embodiment, the safety filter element endcap that has the outlet opening is provided on one side of the safety filter media and a further safety filter element endcap that has no opening and closes the safety filter media on one end is provided on an opposite end.

In embodiments, where in addition to the one sealing component a housing sealing component is provided, an especially preferred embodiment provides for the housing sealing component to also be arranged on the safety filter element endcap.

In a preferred embodiment, the safety filter element circumferential surface forms a contour shape with a single fold rotational symmetry. A closed-loop surface with a contour shape with single-fold rotational symmetry is construed as a contour shape configured such that when rotating the closed-loop surface, only after a rotation of 360° the contour shape matches up with the initial contour shape when starting the rotation. In other words, only after a 360° rotation the contour shape looks the same as at the start of the rotation. A contour shape with single-fold rotational symmetry has no axis of rotational symmetry. In contrast, contour shapes with rotational symmetry have an axis of rotational symmetry such that after rotating around an angle of 180° or less around the axis of rotational symmetry, the contour shape matches up with the initial contour shape at the start of the rotation.

In a preferred embodiment the safety filter element endcap that has the safety filter element circumferential support structure is designed mirror-symmetrical about one plane, especially only about one plane that contains the longitudinal axis.

The invention can also have application in a safety filter element that rather than filtering debry out of a fluid "filters out" tools that have been dropped into the housing. Instead of having a safety filter media, such designs have a safety cage, whereby the safety cage has a safety cage inner space. Otherwise the design can be the same. Hence, in such an embodiment at least on safety filter element endcap is provided, whereby the safety filter element endcap has an outlet opening that leads to the safety cage inner space. Likewise, the safety filter element endcap comprises a safety filter element circumferential support structure, whereby a sealing component is arranged on the safety filter element circumferential support structure and extends along the safety filter element circumferential support structure, whereby the safety filter element endcap additionally comprises a housing sealing component.

A filter system can comprise a safety filter element and a main filter element, whereby the main filter element comprises a main filter media.

In a preferred embodiment, the main filter media has a main filter media inner space and the safety filter media is at least partially arranged inside the main filter media inner space. In a preferred embodiment, more than 50%, preferably more than 75%, preferably more than 90%, preferably more than 95% of the longitudinal extend of the safety filter media is arranged inside the main filter media inner space.

According to a further aspect, the filter system comprises
- a safety filter element and
- a main filter element comprising a main filter media, wherein the main filter media has a main filter media inner space and the safety filter media is at least partially arranged inside the main filter media inner space,
   wherein a sealing component is arranged on the safety filter element and wherein the main filter element has a main filter element circumferential surface, whereby the sealing component of the safety filter element is in sealing contact with the main filter element circumferential surface. In a preferred embodiment, more than 50%, preferably more than 75%, preferably more than 90%, preferably more than 95% of the longitudinal extend of the safety filter media is arranged inside the main filter media inner space.

In a preferred embodiment the main filter element comprises
- a main filter element circumferential surface, said main filter element circumferential surface comprising several surface sections, whereby at least one of the surface sections is arranged such that the normal vector to the surface section is orientated along the longitudinal axis or parallel to the longitudinal axis or into the inside of the main filter element; and
- the one sealing component of the safety filter element being in sealing contact with the main filter element circumferential surface.

In a preferred embodiment, the main filter element circumferential surface has the same geometric shape than the safety filter element circumferential surface, but is arranged offset to the safety filter element circumferential surface to allow the placement of the sealing component between the main filter element circumferential surface and the safety filter element circumferential surface.

In a preferred embodiment, the main filter element has a main filter element endcap that is arranged on one end of the main filter media, wherein the main filter element circumferential surface is arranged on the main filter element endcap. In a preferred embodiment the main filter media has a main filter media inner space and the main filter element endcap has an outlet opening that leads to the main filter media inner space. In a preferred embodiment, the main filter element only has one outlet opening that leads to the main filter media inner space.

In a preferred embodiment, an engagement arrangement is provided between the safety filter element and the main filter element. In a preferred embodiment, the engagement arrangement has a first protrusion, which may for example be a wing or a rib that projects radially, and has a second protrusion, which also may be a wing or a rib that projects radially, whereby the first projection is smaller than the second projection. Furthermore, the engagement arrangement has a first recess and has a second recess, whereby the first recess can accommodate the first protrusion but not the second protrusion and the second recess can accommodate the second protrusion. The engagement arrangement can be arranged such that the safety filter element has the first protrusion and the second protrusion, whereby the main filter element has the first recess and has the second recess. Alternatively, the engagement arrangement can be provided such that the main filter element has the first protrusion and the second protrusion, whereby the safety filter element has the first recess and the second recess.

In a preferred embodiment the safety filter element has a radially extending safety filter element abutment surface and the main filter element has a main filter element abutment surface that can come into contact with the safety filter element abutment surface, the abutment of the main filter element abutment surface with the safety filter element abutment surface limiting the relative movement of the main filter element relative to the safety filter element along the longitudinal axis.

In one embodiment, a filter assembly can comprise a housing and a safety filter element and a main filter element comprising a main filter media, wherein the main filter media has a main filter media inner space and the safety filter media is at least partially arranged inside the main filter media inner space, wherein a sealing component is arranged on the safety filter element and wherein the main filter element has a main filter element circumferential surface, whereby the sealing component of the safety filter element is in sealing contact with the main filter element circumferential surface. In a preferred embodiment, more than 50%, preferably more than 75%, preferably more than 90%, preferably more than 95% of the longitudinal extend of the safety filter media is arranged inside the main filter media inner space.

In a preferred embodiment of the filter assembly, in addition to the one sealing component a housing sealing component is provided on the safety filter element. In a preferred embodiment, the housing has a housing sealing circumferential surface, said housing sealing circumferential surface comprising several surface sections, whereby at least one of the surface sections is arranged such that the normal vector to the surface section is orientated (1) along the longitudinal axis or (2) parallel to the longitudinal axis or (3) to towards the inside of the housing whereby the housing sealing component of the safety filter element is in sealing contact with the housing sealing circumferential surface.

In a preferred embodiment, the housing sealing circumferential surface on the housing has the same geometric shape than the housing sealing element circumferential surface on the safety filter element, but is arranged offset to the housing sealing element circumferential surface to allow the placement of the housing sealing component between the housing sealing circumferential surface and the housing sealing element circumferential surface.

In a preferred embodiment the safety filter element is fixedly connected to the housing or exchangeably connected to the housing. In a preferred embodiment the housing has a housing lid and the safety filter element is fixedly connected to the housing lid or exchangeably connected to the housing lid.

In a preferred embodiment the housing has a housing inner space and the safety filter element is arranged inside the housing inner space, wherein the housing has a housing outlet and wherein the safety filter media has a safety filter media inner space and wherein the safety filter media inner space is in direct flow connection with the housing outlet.

In a preferred embodiment of the filter assembly, a housing engagement arrangement is provided between the safety filter element and the housing, wherein the engagement arrangement has a first protrusion arranged on either the safety filter element or the housing and wherein the engagement arrangement has a bayonet channel arranged on that part of the safety filter element or the housing that the protrusion is not arranged on, whereby the protrusion can engage the bayonet channel to exchangeably connect the safety filter element to the housing in a bayonet manner. In a preferred embodiment, the first protrusion is arranged on the safety filter element and the bayonet channel is arranged on the housing. In a preferred embodiment, the bayonet channel is arranged on the safety filter element and the first protrusion is arranged on the housing. In a preferred embodiment, the housing engagement arrangement comprises more than one protrusion, preferably two, three or four protrusions. In a preferred embodiment the housing engagement arrangement has the same number of bayonet channels as protrusions. In a preferred embodiment the protrusions are equally spaced around the safety filter element and the bayonet channels are equally space around the housing. In a preferred embodiment the protrusions are equally spaced around the housing and the bayonet channels are equally spaced around the safety filter element. Equally spacing the protrusions and the bayonet channels means that there are as many relative rotational positions for exchangeably connecting the safety filter element to the housing as there are protrusions. If it is desired to only have one relative rotational position of the safety filter element relative to the housing for exchangeably connecting the safety filter element to the housing, this can be achieved by offsetting at least one protrusion and the corresponding bayonet channel.

In a preferred embodiment of the filter assembly a main filter element comprising a main filter media is provided. In a preferred embodiment the housing has a housing inner space and the main filter element is arranged inside the housing inner space.

In a preferred embodiment an unfiltered fluid space is provided between an inward facing surface of the housing and an outward facing surface of the main filter element and whereby the housing has an inlet that is in direct flow connection with the unfiltered fluid space.

A method for assembly of a filter assembly can comprise the steps of
- inserting the safety filter element into the housing,
- after the safety filter element has been inserted into the housing, inserting a main filter element into the housing.

In a preferred embodiment the sealing component and/or the housing sealing component is compressed during the method. Compressing the sealing component and/or the housing sealing component while installing the safety filter element and/or while installing the main filter element enhances the working of the seal.

A method for exchanging a main filter element in a filter assembly can comprise the steps of
- extracting a first main filter element out of the housing while leaving the safety filter element in the housing,
- inserting a second main filter element into the housing.

In the following the invention will be described with reference to Figures that only show exemplary embodiments of the invention. The Figures show the following:
- Fig. 1: a schematic perspective view of a safety filter element of a filter assembly according to the invention;
- Fig. 2: a schematic perspective view of the safety filter element of Fig. 1 from a different viewpoint;
- Fig. 3: a schematic side view onto the safety filter element of Fig. 1;
- Fig. 4: a further schematic side view onto the safety filter element of Fig. 1 viewed along the direction of the arrow D in Fig. 3;
- Fig. 5: a schematic sectional view of the safety filter element of Fig. 1 along the line G-G in Fig. 4;
- Fig. 6: a top schematic view onto the safety filter element of Fig. 1 viewed along the direction of the arrow E in Fig. 3;
- Fig. 7: a bottom view onto the safety filter element of Fig. 1 viewed along the direction of the arrow F in Fig. 3;
- Fig. 8: an enlarged, schematic side view of the bottom part of the safety filter element as shown in Fig. 4;
- Fig. 9: an enlarged, schematic sectional view of the bottom part of the safety filter element as shown in Fig. 5;
- Fig. 10: a schematic side view onto an endcap that is used as part of the safety filter element according to Fig. 1;
- Fig. 11: a schematic side view onto an endcap of Fig. 10 viewed along the arrow B in Fig. 10;
- Fig. 12: a schematic perspective view onto the endcap of Fig. 10;
- Fig. 13: a schematic perspective view onto the endcap of Fig. 10 from a different viewpoint;
- Fig. 14: a schematic sectional view onto the endcap of Fig. 10 along the line C-C in Fig. 15;
- Fig. 15: a schematic top view onto the endcap of Fig. 10 viewed along the arrow A in Fig. 10;
- Fig. 16: a schematic side view onto an endcap that is used as part of the safety filter element according to Fig. 1, but without sealing material arranged on it;
- Fig. 17: a schematic side view onto the endcap of Fig. 16 from a different viewpoint viewed along the arrow B in Fig. 16;
- Fig. 18: a schematic perspective view onto the endcap of Fig. 16;
- Fig. 19: a schematic perspective view onto the endcap of Fig. 16 from a different viewpoint;
- Fig. 20: a schematic sectional view onto the endcap of Fig. 10 along the line C-C in Fig. 21;
- Fig. 21: a schematic top view onto the endcap of Fig. 10 viewed along the arrow A in Fig. 16;
- Fig. 22: a schematic top view onto a part of a first housing lid of a housing of a filter assembly according to the invention viewed along the arrow W in Fig. 26;
- Fig. 23: a schematic sectional view onto the part of a first housing lid of Fig. 22 along the line Y-Y in Fig. 22;
- Fig. 24: a schematic perspective view onto the part of a first housing lid of Fig. 22
- Fig. 25: a schematic perspective view onto the part of a first housing lid of Fig. 22 from a different viewpoint;
- Fig. 26: a schematic sideview onto the part of a first housing lid of Fig. 22;
- Fig. 27: a schematic bottom view onto the part of a first housing lid of Fig. 22 viewed along the arrow X in Fig. 26;
- Fig. 28: a schematic bottom view onto an interface ring that together with the part of the first housing lid of Fig. 22 forms the first housing lid of a housing of a filter assembly according to the invention viewed along the arrow A in Fig. 33;
- Fig. 29: a schematic perspective view onto the interface ring of Fig. 28;
- Fig. 30: an enlarged schematic perspective view onto a detail of the interface ring of Fig. 28 as shown Fig. 29;
- Fig. 31: a schematic sectional view onto the interface ring of Fig. 28 along the line C-C in Fig. 32;
- Fig. 32: a schematic top view onto the interface Fig. 28 viewed along the arrow B in Fig. 33
- Fig. 33: a schematic sideview onto the interface ring of Fig. 29;
- Fig. 34: a schematic perspective view onto the first housing lid of the filter assembly of Fig. 37 to 41 with the part of a first housing lid of Fig. 22 and the interface ring of Fig. 29;
- Fig. 35: a schematic perspective view onto the first housing lid of Fig. 34 from a different viewpoint;
- Fig. 36: a schematic sectional view of the first housing lid of Fig. 34;
- Fig. 37: a schematic sectional view onto a main filter element of a filter assembly according to the invention;
- Fig. 38: a schematic perspective view of the main filter element of Fig. 37;
- Fig. 39: a schematic sectional view onto a further embodiment of a main filter element;
- Fig. 40: a schematic perspective view of the main filter element of Fig. 39;
- Fig. 41: a schematic sectional view of a filter assembly according to the invention viewed along the line C-C in Fig. 43;
- Fig. 42: a schematic side view onto the filter assembly of Fig. 41;
- Fig. 43: a schematic top view onto the filter assembly of Fig. 41 viewed along the arrow B in Fig. 42;
- Fig. 44: an enlarged schematic sectional view of the bottom part of the filter assembly according to Fig. 41;
- Fig. 45: a schematic side view onto a housing lid of a filter assembly according to the invention;
- Fig. 46: a schematic top view onto the housing lid of Fig. 45 along the line A in Fig. 45;
- Fig. 47: a schematic sectional view through the housing lid of Fig. 45 along the line C-C in Fig. 50;
- Fig. 48: a schematic perspective view onto the housing lid of Fig. 45;
- Fig. 49: a schematic perspective view onto the housing lid of Fig. 45 as viewed from a different viewpoint;
- Fig. 50: a schematic bottom view onto the housing lid of Fig. 45 along the line B in Fig. 45 and
- Fig. 51: an enlarged detail of the schematic sectional view of Fig. 47.

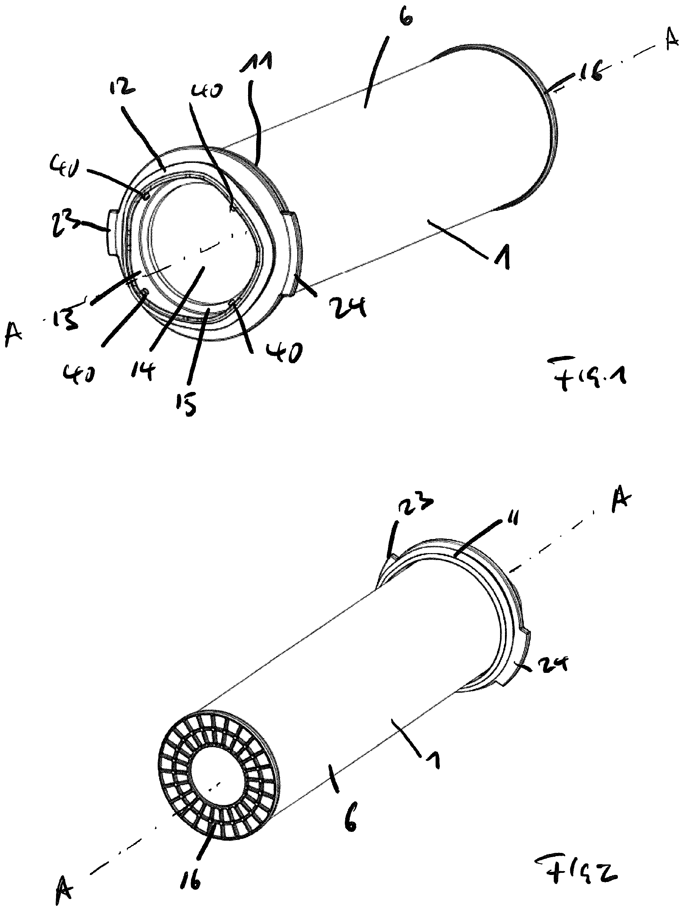

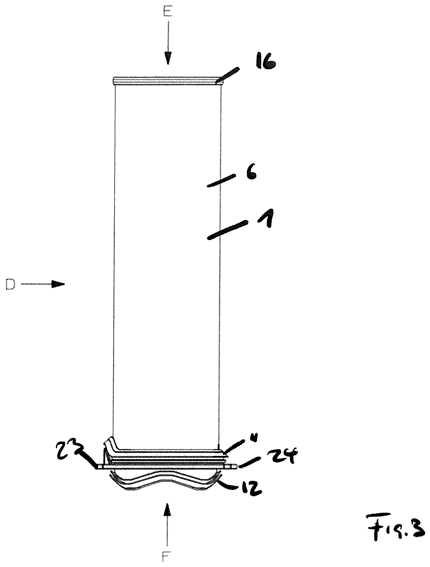

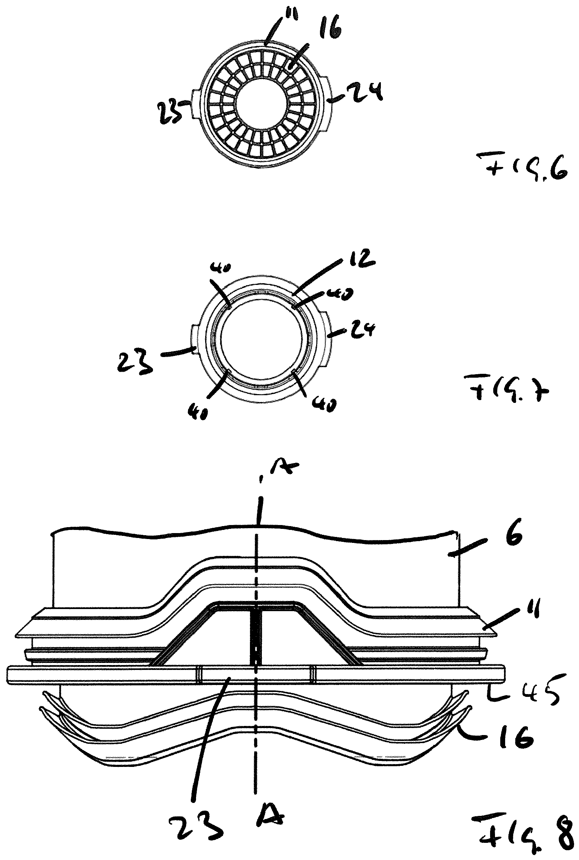

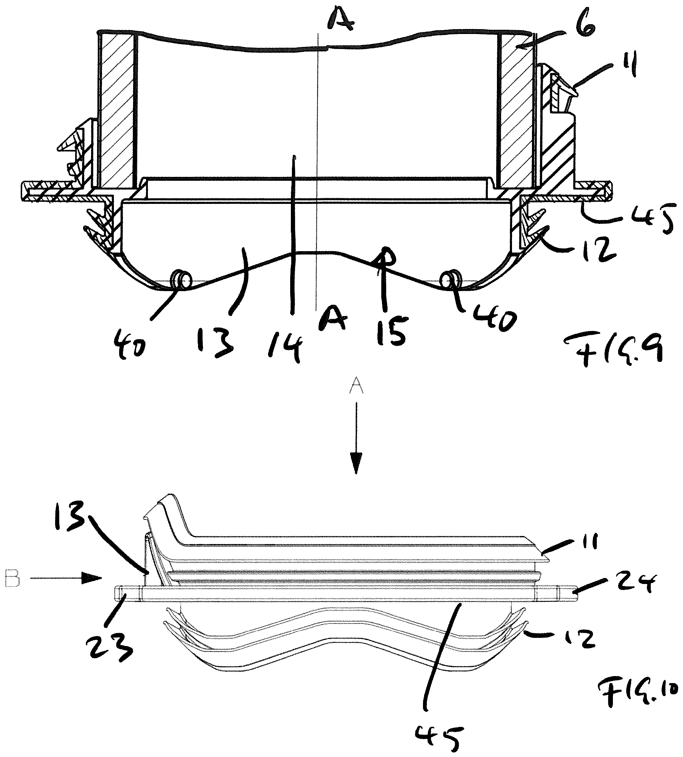

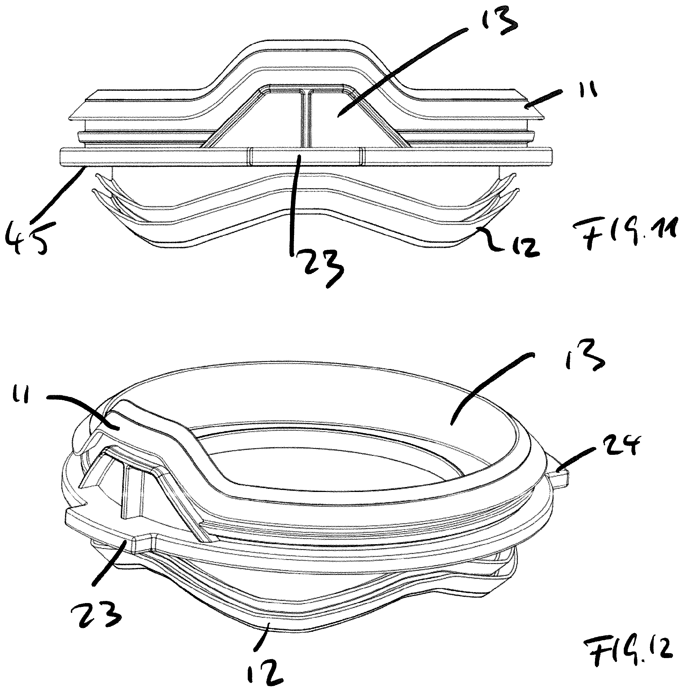

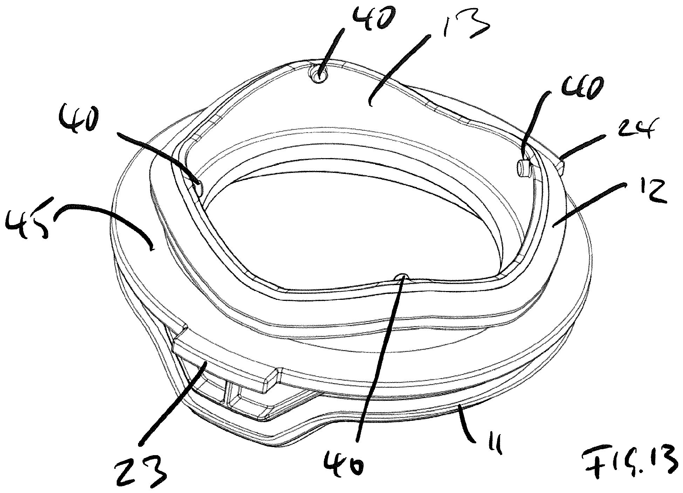

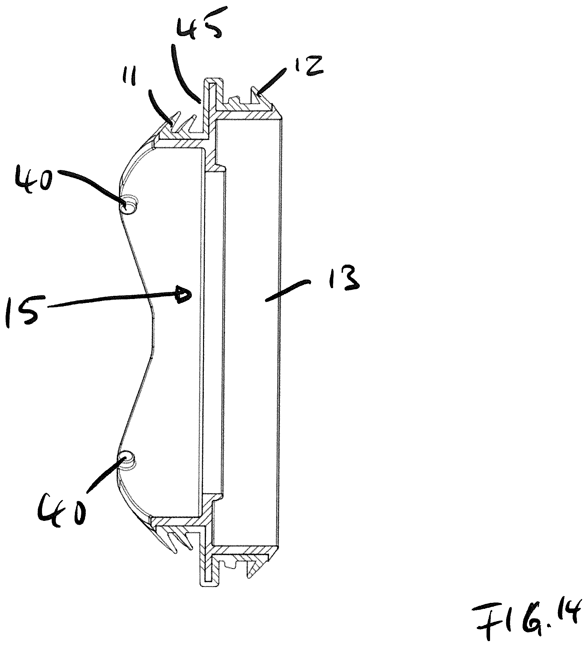

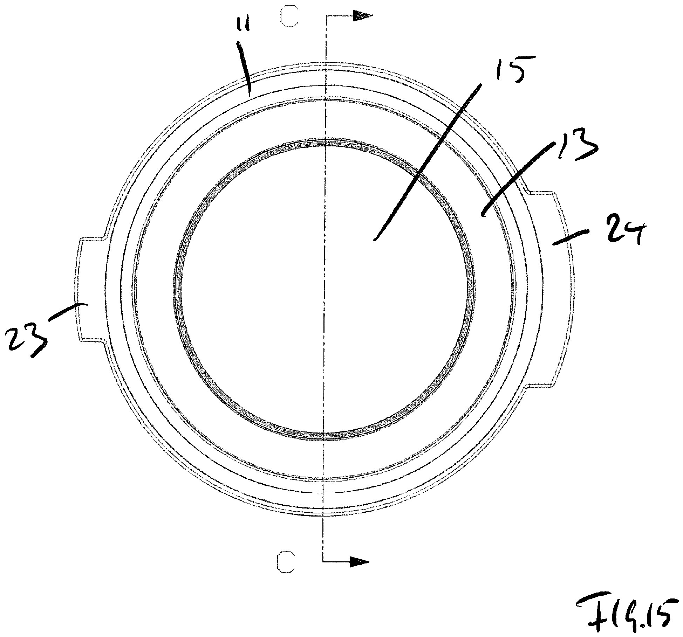

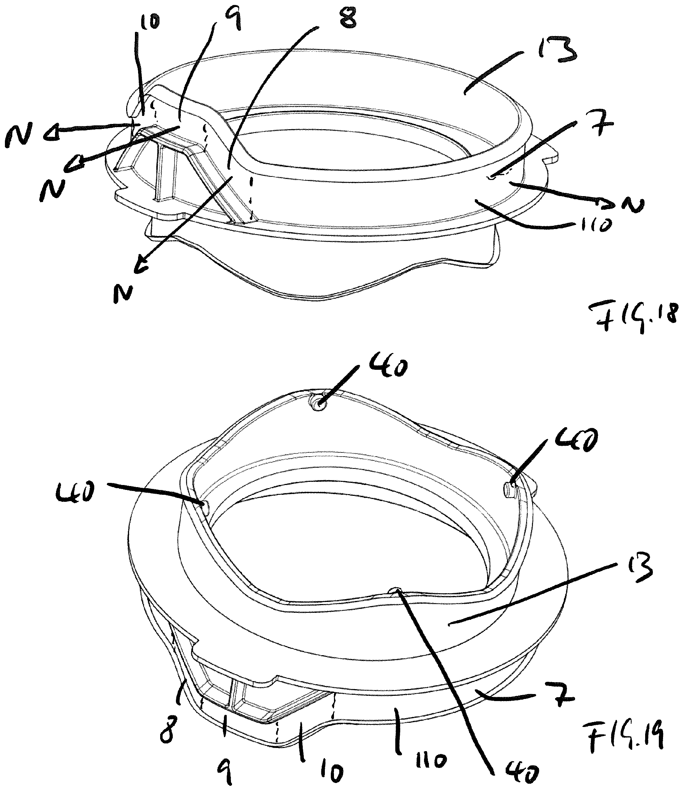

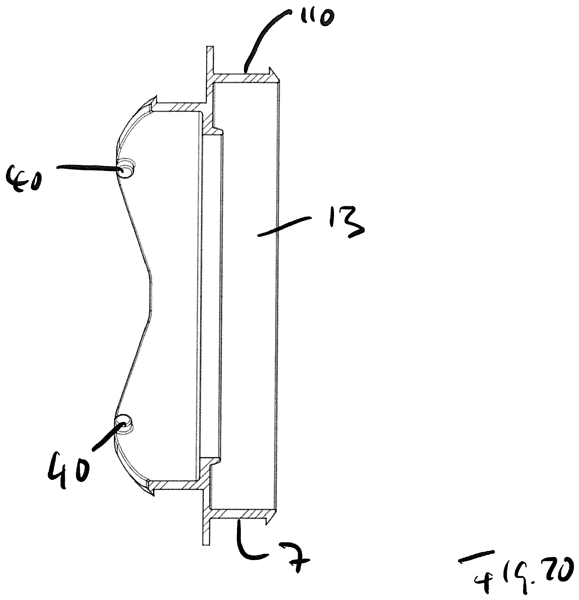

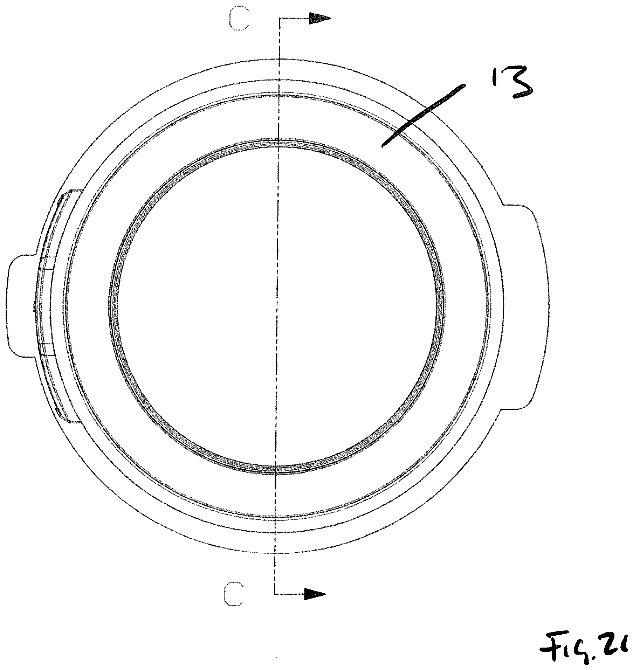

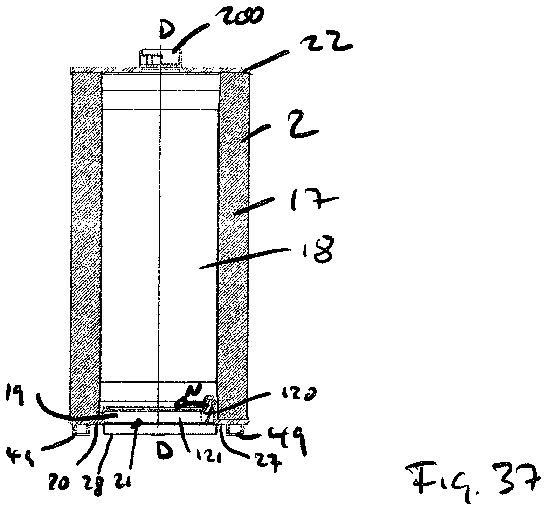

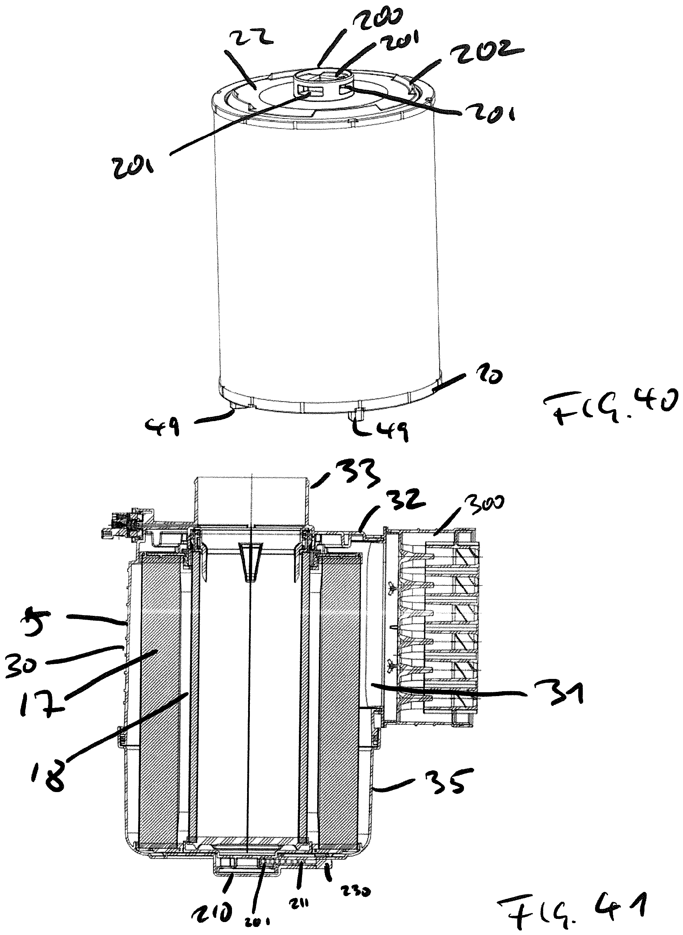

Fig. 1 to 21 shows a safety filter element 1. Together with the main filter element 2 shown in Fig. 37 and 38 or 39 and 40, the safety filter element 1 can form a filter system. Together with a housing 5 shown in Fig. 41 to 44 the filter system can form a filter assembly according to the invention.

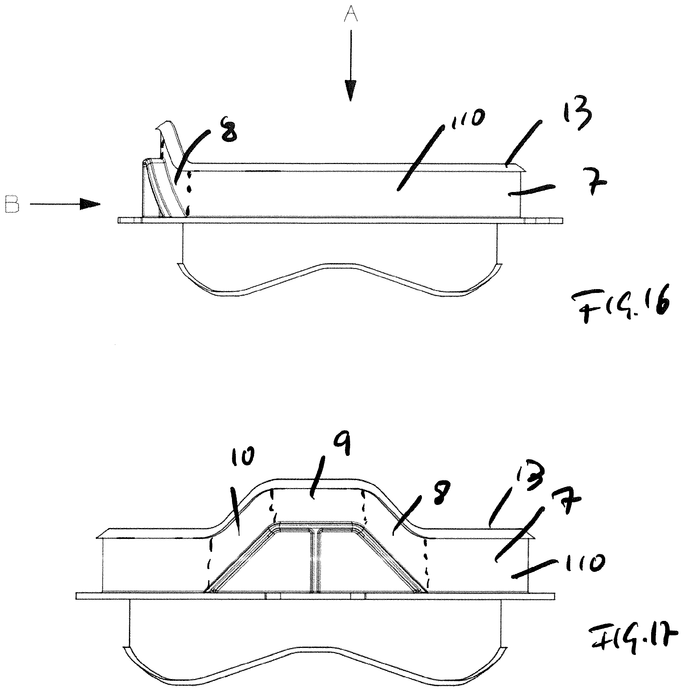

The safety filter element 1 extends along an axis A. The safety filter element 1 comprises
a safety filter media 6. The safety filter element 1 comprises a safety filter element circumferential surface 7, said safety filter element circumferential surface 7 comprises several surface sections 8,9,10, 110. At least one of the surface sections 8,9,10,110 namely the surface sections 8, 9, 10, 110 is arranged such that the normal vector N to the surface section 8, 9, 10, 110 is orientated to point to the outside of the safety filter element 1. At least one sealing component 11 extends along the safety filter element circumferential surface 7. The surface sections 8, 9, 10, 110 and their normal vector N are best seen in Fig. 16 to 21 that shows the endcap 13 of the safety filter element without the sealing component 11. As indicated by the dashed lines in Figs. 16 to 21, the surface sections 8, 9, 10, 110 must not be designed discernible by design features like rim, edges or the like, but can be imaginary surface sections on a homogenous surface. Reference to surface sections 8, 9, 10, 110 is simply made in this description as a means to describe the geometric shape of the safety filter element circumferential surface 7.

In the embodiment shown in Fig. 16 to 21 the safety filter element circumferential surface 7 has a surface section 9 that is offset from the surface section 110 in the direction of the axis A of the safety filter element. The surface sections 110 that makes up a part of the safety filter element circumferential surface is arranged to form a part of a ring-shaped surface on the outside of a cylinder, while the further surface section 9 is arranged to form a part of a different ring-shaped surface on the outside of the cylinder, while a first angled surface section 8 connects the surface section 110 with the one, offset surface section 9 on the one side, while a second angled surface section 10 connects the surface section 110 and the one, offset surface section 9 on the other side. The angled surface sections 8,10 hence appear like a ramp leading from the ring on which the surface section 110 is arranged up to the offset surface section 9 on the one side and down from the offset surface section 9 back to the ring, in which the surface section 110 is arranged. In such a design, all normal vectors N to the respective surface section 8,9,10,110 are orientated to point to the outside of the safety filter element 1.

In the embodiment of Fig. 1, in addition to the one sealing component 11 a housing sealing component 12 is provided on the safety filter element 4. In the embodiment shown in Fig. 1, the housing sealing component 12 has been manufactured as one piece with the sealing component 11.

As shown in Fig. 1, for example, a safety filter element endcap 13 is provided that is arranged on one end of the safety filter media 6. The safety filter element circumferential surface 7 is arranged on the safety filter element endcap 13.

In the embodiment shown in Fig. 1, for example, the safety filter media 6 has a safety filter media inner space 14 and the safety filter element endcap 13 has an outlet opening 15 that leads to the inner space 14.

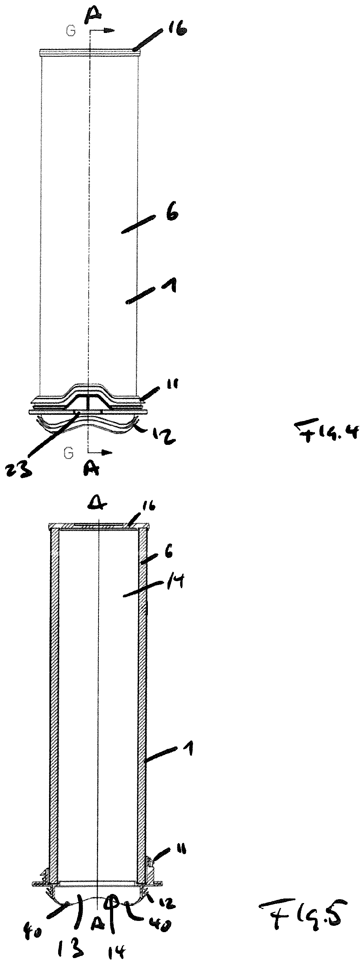

In the embodiment shown in Fig. 1 and 5 the safety filter media 6 has the shape of a hollow cylinder.

In the embodiment shown in Fig. 1 and Fig. 16 to 21 the safety filter element circumferential surface 7 forms a contour shape with a single-fold rotational symmetry.

The safety filter element 1 has a further safety filter element endcap 16, which is of closed design and arranged opposite the safety filter element endcap 13 that has the outlet opening 15.

As shown in Fig. 37 and 38 or 39 and 40, the main filter element 2 has a main filter media 17. The main filter element 2 extends along a longitudinal axis D, which in the assembled state of the filter system is the same axis as longitudinal axis A.

The main filter media 17 has a main filter media inner space 18. When assembled to form the filter system or when the filter system is fully arranged inside the housing 5 to form the filter assembly according to the invention, the safety filter media 6 is at least partially, in the embodiment of Fig. 41 to 44 fully arranged inside the main filter media inner space 18.

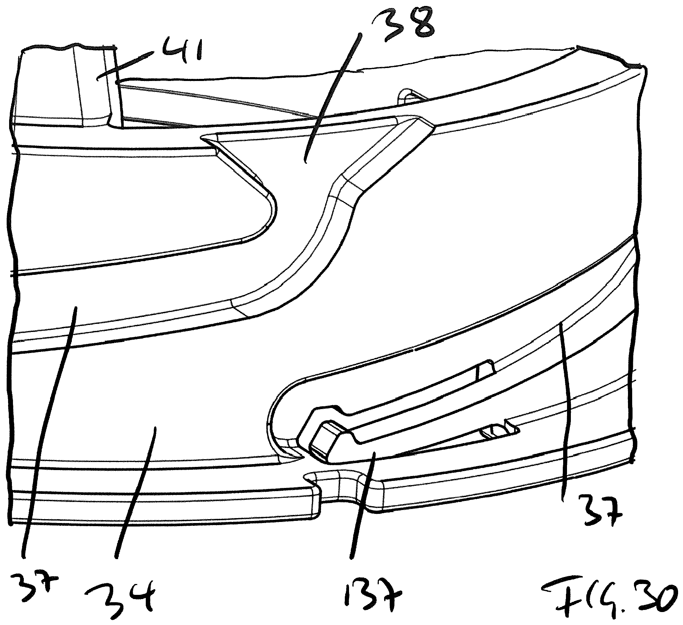

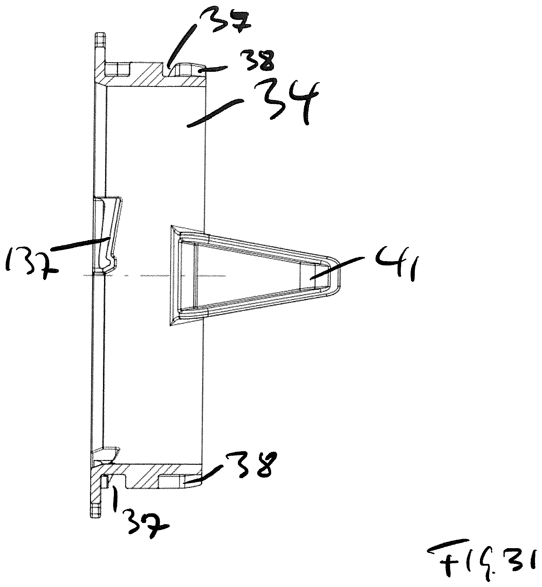

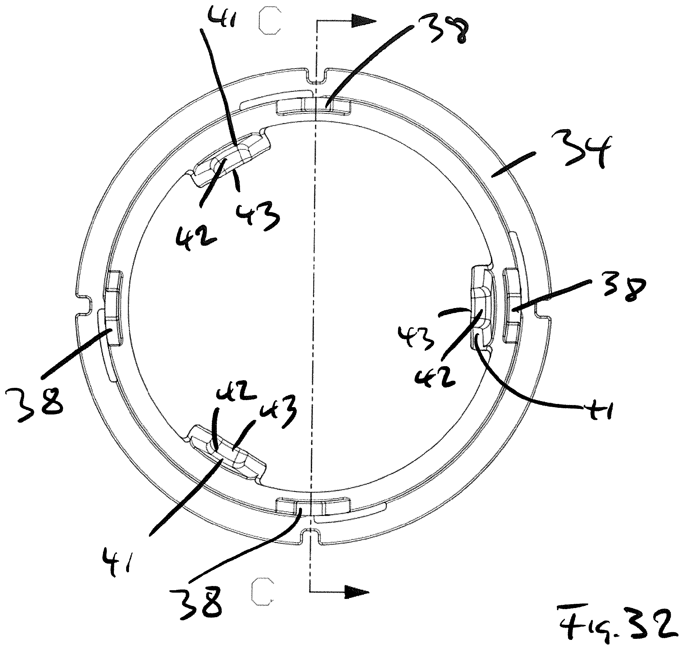

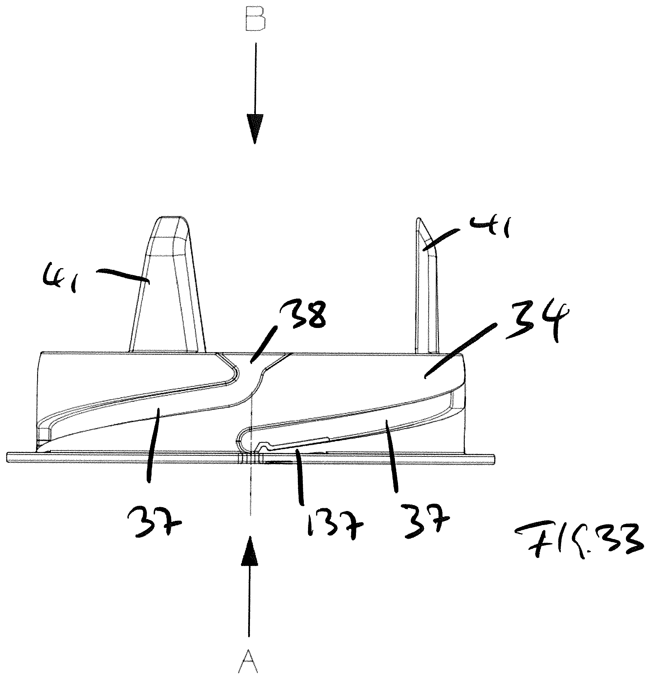

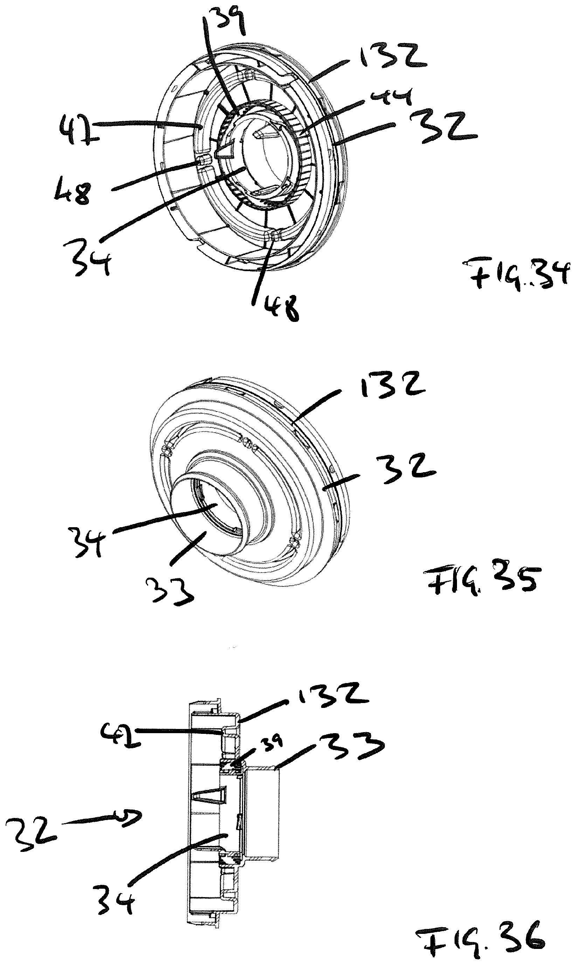

In the embodiment of Fig. 1 to 44, the main filter element 2 comprises a main filter element circumferential surface 19. The main filter element circumferential surface 19 comprises several surface sections 120, 121, whereby at least one of the surface sections 120, 121, namely the surface section 120, 121 is arranged such that the normal vector N to the surface section 120, 121 is orientated pointing towards the main filter media inner space 18. In the assembled state of the filter system, the sealing component 11 of the safety filter element 1 is in sealing contact with the main filter element circumferential surface 19.

In the embodiment of Fig. 1 to 44, a main filter element endcap 20 is provided that is arranged on one end of the main filter media 17. The main filter element circumferential surface 19 is arranged on the main filter element endcap 20. The main filter element endcap 20 has an outlet opening 21 that leads to the main filter media inner space 18.

The main filter media 17 has the shape of a hollow cylinder. A further main filter element endcap 22 is provided, which is closed and arranged on the opposite end of the main filter media 17 compared to the main filter element endcap 21.

The safety filter element 1 has a first projection in the form of a first wing 23 in form of wing that projects radially and has a second projection in the form of a second wing 24 that projects radially, whereby first wing 23 is smaller than the second wind 24. The main filter element 2 has a first recess and has a second recess, whereby first recess can accommodate the first wing 23 but not the second wing 24 and the second recess can accommodate the second wing. The first recess and the second recess are formed in a circular wall 28 that projects axially from the bottom surface 27 of the main filter element endcap 21. This design ensures that the safety filter element 1 can only be inserted into its final position in the main filter element 2 in one specific rotational relationship.

In the embodiment shown in Fig. 1 to 44 the housing 5 comprises a central housing part 30. An inlet tube 31 is arranged on the central housing part 30. A fluid to be filtered will enter the housing 5 through the inlet tube 31. The housing 5 further comprises a first housing lid 32 with an outlet tube 33 being formed on the first housing lid 32. Filtered fluid will leave the housing 5 through the outlet tube 33. An interface ring 34 is attached to a part 132 of the first housing lid 32. The housing 5 further comprises a second housing lid 35.

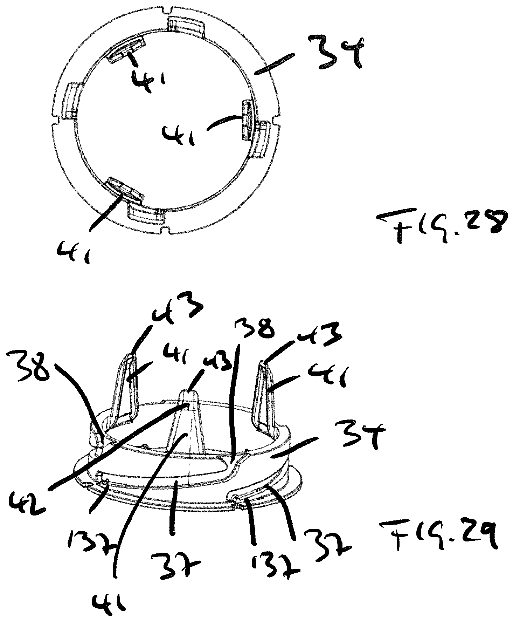

Fig. 1 for example shows that locking pins 40 are provided on the safety filter element endcap 13 that protrude into the outlet opening 15 of the safety filter element endcap 13. Fig. 29 for example shows that the interface ring 34 is provided with a bayonet channel 37 that terminates in a receiving mouth 38. As the safety filter element 1 is inserted into the housing 5, the locking pins 40 can be brought into alignment with the receiving mouth 38 by rotating the safety filter element 1 inside the housing 5 about its axis A. Once in alignment with the receiving mouth 38 the respective locking pin 40 can be made to enter into the bayonet channel 37 by further combined linear and rotational movement of the safety filter element 1 relative to the housing 1 thereby locking the safety filter element 1 to the housing 5. A flexible knob-structure 137 is provided at the end of the bayonet channel 37 to hold the locking pin 40 in the lowest part of the bayonet channel 37.

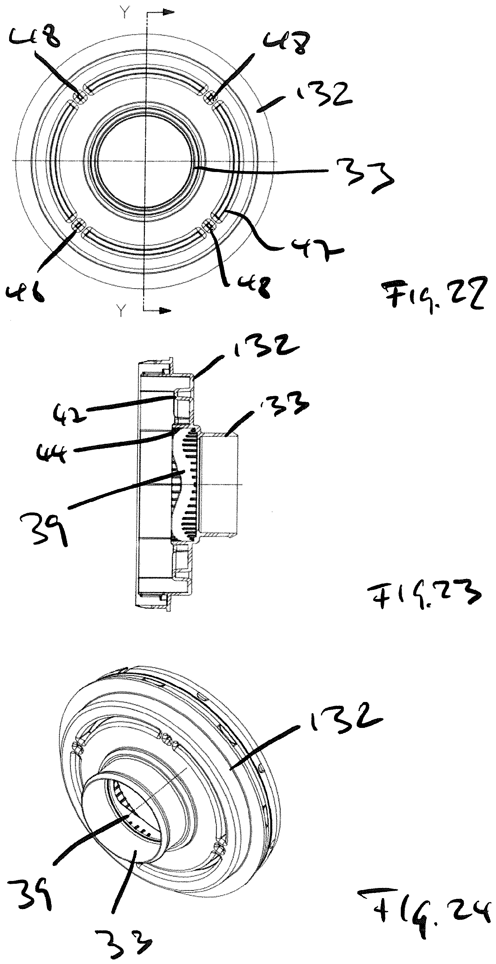

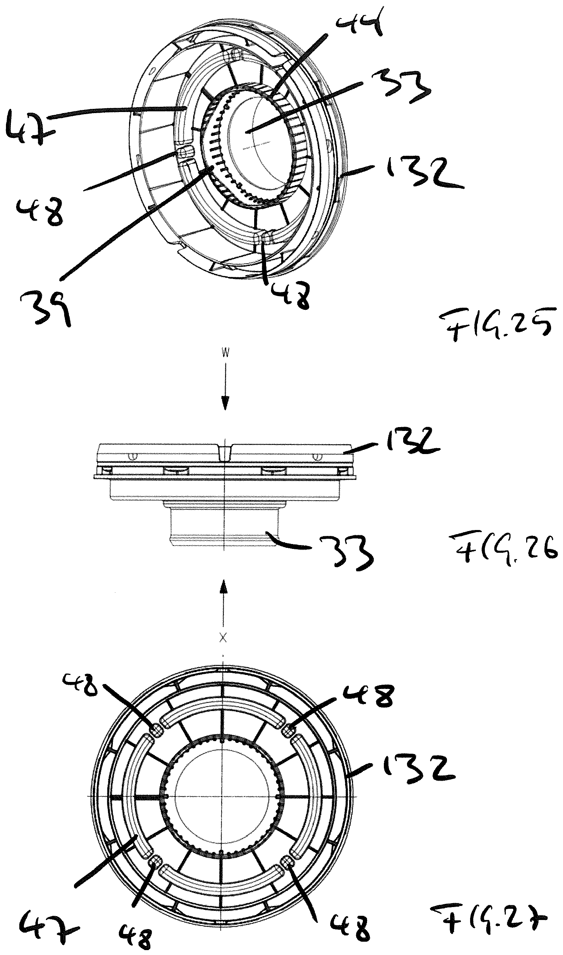

As the safety filter element 1 is locked to the housing 5, the undulating housing sealing component 12 comes into contact with an undulating sealing surface 39 on the interface ring 34 thereby sealing the safety filter element 1 against the housing 5 and preventing any fluid to pass from the outside of the safety filter element 1 past the safety filter element 1 into the outlet tube 33 of the first housing lid 32. Proper alignment of the undulating housing sealing component 12 with the undulating sealing surface 39 of the interface ring 34 can be achieved by appropriate relative positioning of the locking pins 40 relative to the undulating housing sealing component 12 on the one hand and appropriate alignment of the end of the bayonet channel 37 and the undulating sealing surface 39 on the other hand. In the embodiment shown in Fig 23 and 25, the undulating sealing surface 39 is provided by a surface without ribs arranged between a series of ribs that each terminate at the surface without ribs.

Fig. 28 to 33 show the interface ring 34 to have ribs 41 that point into the direction of the safety filter element inner space 14. Each rib 41 has an angled outward facing surface 42 and a tip 43 that is arranged more inwards than the connection between the respective rib 41 and the remainder of the interface ring 34. The angled outward facing surface 42 of the ribs 41 facilitate the assembly of the safety filter element 1 into the housing 5. Fig. 40 shows that the ribs 41 can be used to engage with the wall surrounding the outlet opening 15 of the safety element 1 and can be used to center the safety filter element 1 as it is moved towards the first housing lid 32.

Starting with an empty housing 5 and the second housing lid 35 removed, first the safety filter element 1 is inserted in a linear motion into the housing 5. If during this linear motion the safety filter element 1 is not perfectly aligned, the ribs 41 can be used to center the safety filter element 1 as it comes closer to the first housing lid 32.

If during this insertion the pins 40 happen to be in alignment with the receiving mouth 38, the safety filter element 1 can be further inserted into the housing 5 by way of combined linear and rotational movement inserting the pins 40 into the bayonet channels 37 and travelling until the end of the bayonet channels 37, which will bring the undulating housing sealing component 12 into contact with the undulating sealing surface 39 on the interface ring 34.

If the pins 40 are not aligned with the receiving mouth 38, the pins will first abut against the wall of the interface ring 34 between the receiving mouths 38. By way of rotation of the safety filter element 1 relative to the housing the pins 40 can be aligned with the receiving mouth 38 and the safety filter element 1 can be further inserted into the housing 5 by way of combined linear and rotational movement inserting the pins 40 into the bayonet channels 37 and travelling until the end of the bayonet channels 37, which will bring the undulating housing sealing component 12 into contact with the undulating sealing surface 39 on the interface ring 34.

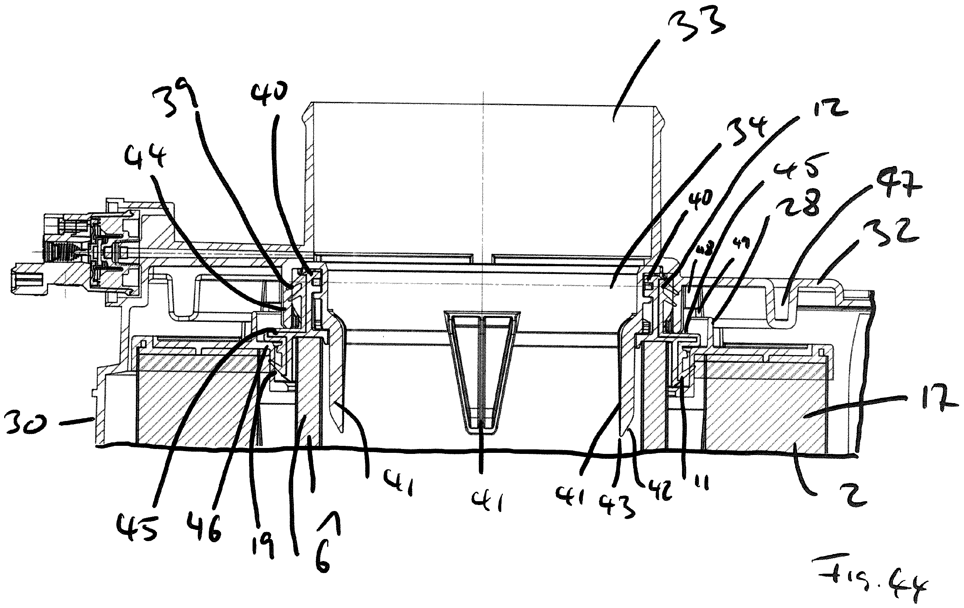

Fig 44 shows the final position of the top part of the safety filter element 1 and its cooperation with the interface ring 34 and hence the first housing lid 32. Fig. 44 shows that several sealing effects are created. The housing sealing component 12 is designed as a dual lip-seal (with two lips) that seals with radial sealing force against the undulating sealing surface 39. Furthermore the radially protruding part 45 of the material that forms the sealing component 11, the wings 23, 24 and the housing sealing component 12 abuts against the top rim of the circular wall 44 and hence acts as an additional axial seal.

After the safety filter element 1 has been completely inserted, the main filter element 2 is inserted into the housing 5 by way of linear movement. If during this insertion the smaller wing 23 happens to be in alignment with the smaller first recess 25 and the larger wing 24 happens to be in alignment with the larger second recess 26, the linear movement of the main filter element into the housing 5 can be continued until the main filter element reaches its final position shown in Fig. 41. If the smaller wing 23 is not in alignment with the smaller first recess 25 and the larger wing 24 is not in alignment with the larger second recess 26, the wings 23, 24 will abut against the circular wall 28 on the bottom surface 27 of the main filter element 2. By way of rotation of the main filter element 2 relative to the housing 5 the smaller wing 23 is brought into alignment with the smaller first recess 25 and the larger wing 24 is brought into alignment with the larger second recess 26 and the main filter element 2 can be further inserted into the housing 5 by way of linear movement until it reaches the position shown in Fig 41.

As the main filter element 1 reaches its final position shown in Fig. 41, the sealing component 11 that together with the safety filter element circumferential surface 7 forms a contour shape with a single-fold rotational symmetry comes into contact with the main filter element circumferential surface 19 on the main filter element 2, the main filter element circumferential surface 19 also forming a contour shape with a single-fold rotational symmetry to receive the sealing component 11 thereby sealing the main filter element 1 against the safety filter element 1 and preventing any fluid to pass from the outside of the main filter element 2 past the main filter media 17 into the main filter media inner space 18. Proper alignment of the sealing component 11 with its particular shape with the counter surface on the main filter element 2 can be achieved by appropriate relative positioning of the small wing 23 and the large wing 24 relative to the surface sections 8, 9, 10, 110, that give the sealing component 11 its contour shape with a single-fold rotational symmetry, on the one hand and appropriate alignment of the small first recess 25 and small second recess 26 and the main filter element circumferential surface 19 on the main filter element 2.

Fig 44 shows that several sealing effects are created between the main filter element 2 and the safety filter element 1. The sealing component 7 is designed as a lip-seal that seals with radial sealing force against the main filter element circumferential surface 19 of the main filter element 2. Furthermore the radially protruding part 45 of the material that forms the sealing component 11, the wings 23, 24 and the housing sealing component 12 abuts against the top rim of the circular wall 46 that is arranged radially inside the circular wall 28 on the bottom surface 27 of the main filter element and hence acts as an additional axial seal. The radially protruding part 45 forms a radially extending safety filter element abutment surface. The top rim of the circular wall 46 forms a main filter element abutment surface that can come into contact with the safety filter element abutment surface, the abutment of the main filter element abutment surface with the safety filter element abutment surface limiting the relative movement of the main filter element relative to the safety filter element along the longitudinal axis. The design shown in Fig. 44 can hence be understood to be a design, where the safety filter element 1 has a first safety filter element circumferential surface 7 as described above and has a second safety filter element circumferential surface (the surface of the protruding part 45), whereby a first sealing component 11 (the part of the sealing material on the safety filter element circumferential surface 7) extends along the first safety filter element circumferential surface 7 and a second sealing component (the part of the sealing material on the protruding part 45) extends along the second safety filter element circumferential surface. In the design shown in Fig. 44 the first sealing component and the second sealing component are parts of the same sealing material.

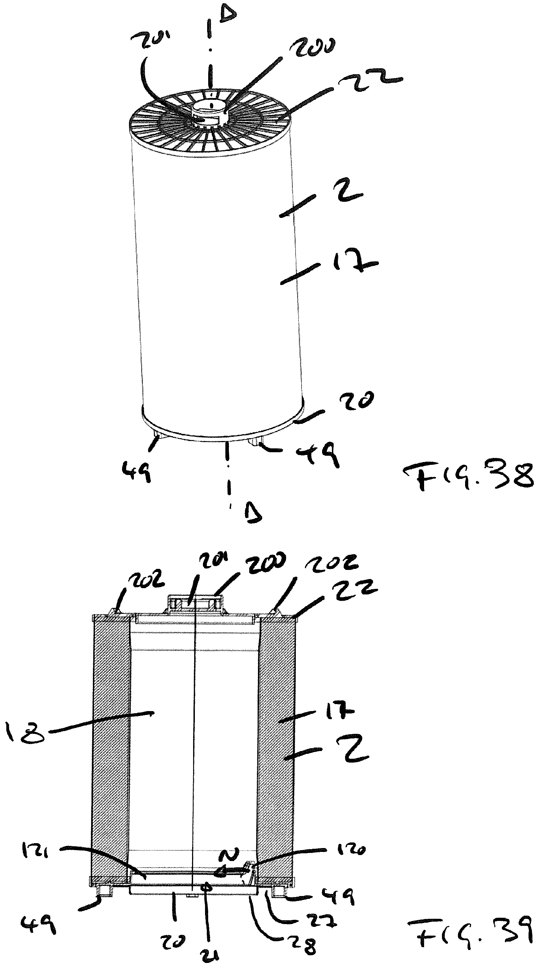

The first housing lid 32 has an inwardly protruding wall 47. As part of the protruding wall 47 knobs 48 can be provided that are flush with the protruding wall 47 and are formed by interruptions in the protruding wall 47. In the embodiment of the main filter element shown in Fig. 37, 38 and the embodiment shown in Fig. 39,40 hollow cylinders 49 are provided protruding from the bottom surface 27. The hollow cylinders 49 are formed to take up the knobs 48 once the main filter element 2 has reached its endposition. Given that there is
- a fixed spatial relationship between the first recess 25 and the second recess 26 and the cylinders 49 that are all arranged on the bottom surface 27;
- a fixed spatial relationship between the wings 23, 24 and the locking pins 40 that are arranged on the safety filter element endcap 13;
- the end of the bayonet channel 37 and the knobs 48 that are arranged on the first housing lid 32 and the interface ring 34;
the engagement between the cylinders 49 and the knobs 48 also indicates that the main filter element 2, the safety filter element 1 and the first housing lid 32 all have taken up a predetermined position relative to each other.

Fluid to be filtered will be introduced into via the inlet tube 31 into the housing 5 of the assembled filter assembly 4. The fluid to be filtered will enter into the circumferential space between the inward facing surface of the central housing part 30 and the outward facing surface of the main filter media. Depending on the orientation and placement of the inlet tube, the fluid to be filtered can be made to swirl around the outward facing surface of the main filter media. Making the fluid swirl can aid transporting larger particles in the fluid radially outward towards the inward facing surface of the central housing part 30.

The fluid to be filtered will pass through the main filter media 17 and the safety filter media 6 into the safety filter media inner space 14 and out of the outlet opening 15 of the safety filter media endcap 13 through the outlet tube 33 of the first housing lid 32.

The sealing component 11 will prevent any fluid from entering the main filter media inner space 18 by any other way than via the main filter media 17. The housing sealing component 12 will prevent any fluid from entering into the outlet opening 15 of the safety filter media endcap 13 by any other way than via the safety filter media 6.

If the main filter element 2 needs to be exchanged, for example when the main filter media 17 has become clogged, the second housing lid 35 can be opened and the main filter element 2 withdrawn in a linear movement. As the main filter element 2 is withdrawn, the safety filter element 1 prevents any unwanted items, particles or fluid droplets to enter into the outlet tube 33 of the first housing lid 32. A new main filter element 2 is then introduced as describe above.

As can best seen from Fig. 41 and 44, the presence of the safety filter element 1 determines the placement of the main filter element 2 and hence the placement of the second housing lid 35, because the main filter element 2 rests on the radially protruding wall 45 of the safety filter element 1 and the second housing lid 35 rests on the main filter element 2. If the safety filter element 1 would be missing, the main filter element 2 would slide deeper into the central housing part 30 and deeper towards the first housing lid 32 and further away from the second housing lid 35. This misalignment can be made to be noticed by the user, for example if the attachment means for the first housing lid 32 (not shown) can only engage, if the main filter element 2 is in the position shown in Fig. 41 but not deeper in the central housing part 30 (closer to the first housing lid 32).

The embodiment of the main filter element 2 shown in Fig. 37 and 38 a protruding part 200 is provided. A recess 201 is provided in the protruding part 200. The recess 201 is orientated radially to the axis D of the main filter element 2.

The embodiment of the main filter element 2 shown in Fig. 39 and 40 differs from the one show in Fig. 37 and 38 in the diameter and length of the main filter media 17, which is wider, thicker and shorter in the embodiment of Fig. 39 and 40 compared to the one of Fig. 37 and 38. Also the protruding part 200 has four recess 201 provided in the protruding part 200. Each recess 201 is orientated radially to the axis D of the main filter element 2. In addition the endcap 22 has ledges 202 that are provided to interact with the inside facing surface of the second housing lid 35 to dampen relative movements between the endcap 22 and the second housing lid 35, especially to reduce rattle noises.

The filter assembly 4 shown in Fig. 41 to 44 has a prefilter 300. Also, the embodiment of Fig. 41 to 44 has a pressure sensor.

Fig. 41 to 44 show that the main filter element endcap 22 is provide with an outwardly protruding protruding part 200. In the assembled state the protruding part 200 engages a dome shaped receiving part 210 on the second housing lid 35. The engagement stabilizes the position of the end of the main filter element 2 that has the endcap 22 relative to the housing 5. The receiving part in the embodiment shown in Fig. 41 to 44 has a through-hole 211. A latch 230 is provided that can be positioned
- in a locking position, whereby in the locking position the latch 230 is arranged in the through-hole 211 and in the recess 201 of the protruding part 200 of the main filter endcap 22 and
- in a release position, whereby in the release position the latch 230 is not arranged in the recess 201.

As can best seen from Fig. 41, the presence of the safety filter element 1 determines the placement of the main filter element 2 and hence the placement of the second housing lid 35, because the main filter element 2 rests on the radially protruding wall 45 of the safety filter element 1 and the second housing lid 35 rests on the main filter element 2. If the safety filter element 1 would be missing, the main filter element 2 would slide deeper into the central housing part 30 and deeper towards the first housing lid 32 and further away from the second housing lid 35. This misalignment can be made to be noticed by the user, for example if latch 230 can not engage into the recess 201, if the main filter element 2 is too deep in the central housing part.

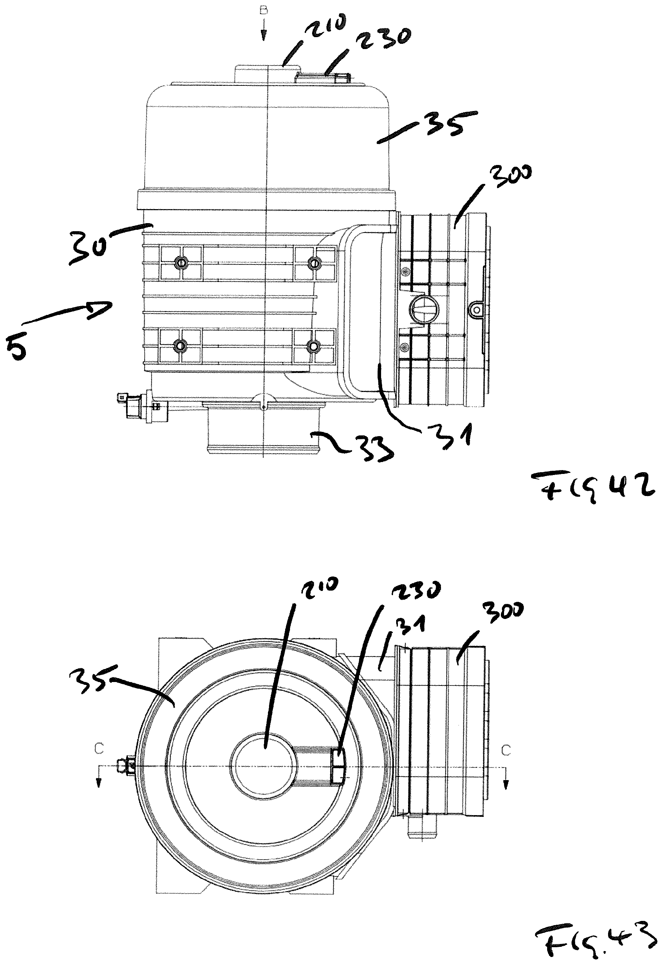

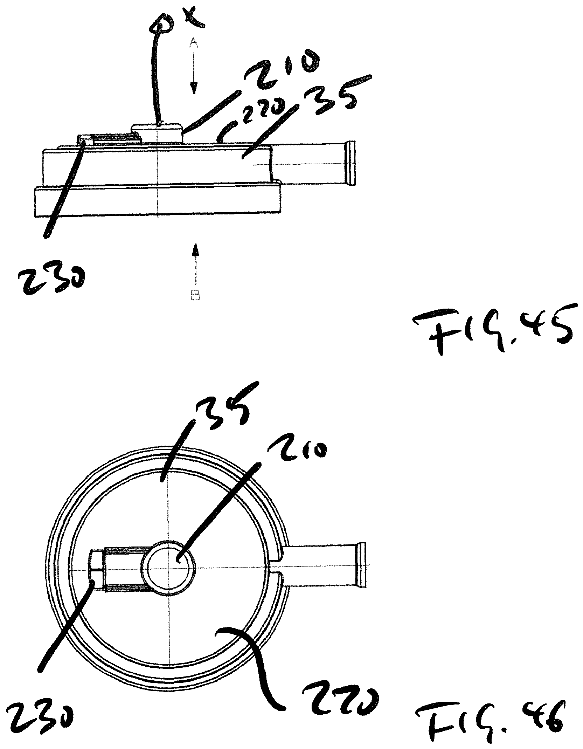

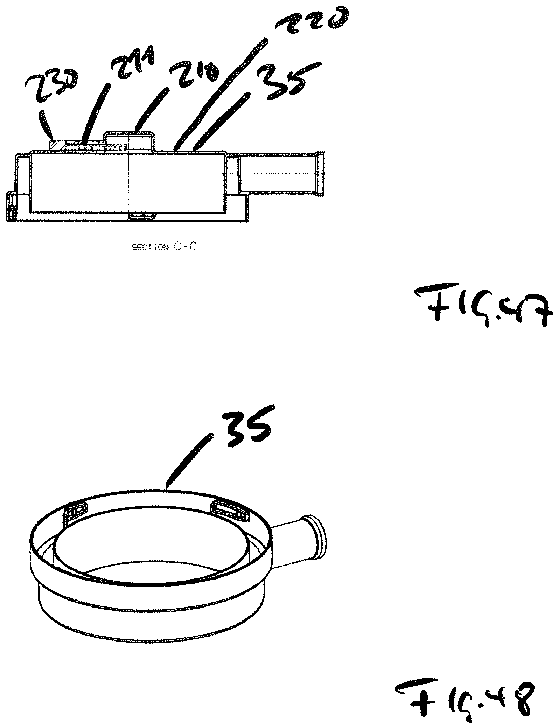

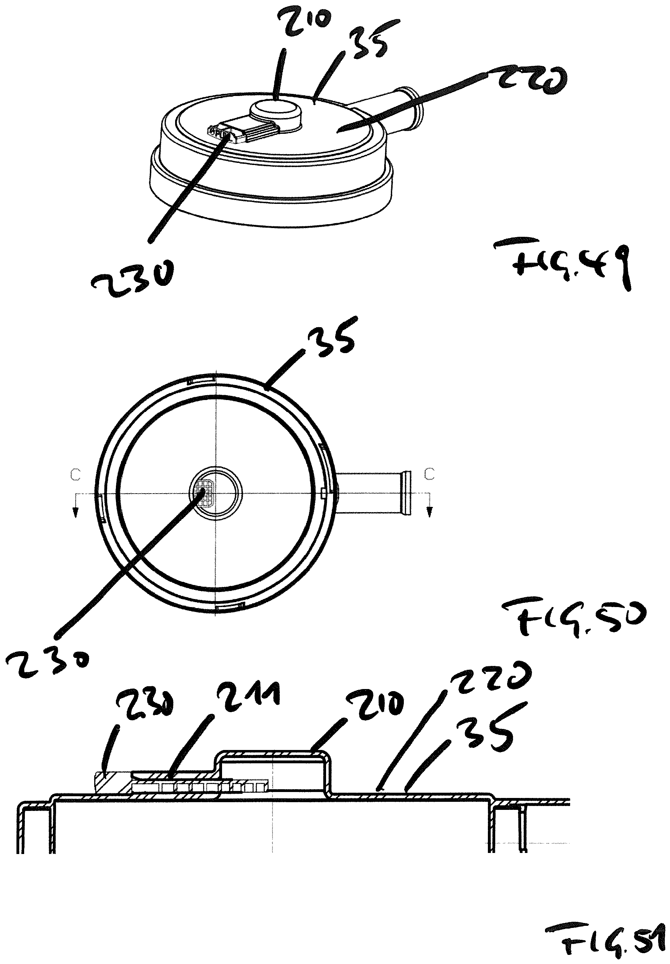

Fig. 45 to 51 show a housing lid that can be a second housing lid 35 of a filter assembly according to the invention. For the use of second housing lid 35, the filter assembly as shown in Fig. 41 to 44 would be adapted to make the central housing part 30 larger (to extend higher up in Fig. 42 / to extend further down Fig. 41). As can be seen when comparing the second housing lid of the embodiment of Fig. 41 to 44 to the second housing lid 35 of Fig. 45 to 51, the circular rim of the second housing lid that protrudes towards the central housing part 30 and is intended to engage with the central housing part 30 is larger in the embodiment of Fig. 41 to 44 compared to Fig. 45 to 51.

The housing lid 35 has a dome shaped receiving part 210 that protrudes in a protruding direction X from surrounding parts of the second housing lid 35, whereby a through-hole 211 is arranged in the receiving part 210 that leads from the outside of the housing lid 35 into the inside of the receiving part 210. The housing lid of Fig. 45 to 51 can work together with the endcaps 22 of the main filter elements 2 shown in Fig. 37/38 or Fig. 39/40. The endcaps 22 of these main filter elements 2 have a protruding part 200 that can be at least partially received inside the dome shaped receiving part 210, whereby a recess 201 is provided in the protruding part 200. A latch 230 is provided that can be positioned
- in a locking position, whereby in the locking position the latch 230 is arranged in the through-hole and in the recess and
- in a release position, whereby in the release position the latch 230 is not arranged in the recess.

The surrounding parts of the housing 5 that surround the dome shaped receiving part 210 have an outward facing surface 220 that is arranged in a plane, whereby the receiving part 210 protrudes outward from said plane into the protruding direction X.

## Claims

1. A filter assembly (4) comprising
• a filter element (2) that has a filter media (17) and an endcap (22) arranged at one end of the filter media (17),
• a housing (5), whereby the filter element (2) is arranged inside the housing (5),
**characterized in that**
• the housing (5) has a dome shaped receiving part (210) that protrudes in a protruding direction (X) from surrounding parts of the housing (5), whereby a through-hole (211) is arranged in the receiving part (210) that leads from the outside of the housing (5) into the inside of the receiving part (210),
• the endcap (22) has a protruding part (200) that is at least partially received inside the dome shaped receiving part (210), whereby a recess (201) is provided in the protruding part (200),
whereby a latch (230) is provided that can be positioned
• in a locking position, whereby in the locking position the latch (230) is arranged in the through-hole (211) and in the recess (201) and
• in a release position, whereby in the release position the latch (230) is not arranged in the recess (201).

2. Filter assembly according to claim 1, **characterized in that** the receiving part (210) has one single through-hole (211) for the latch (230), but the endcap (22) has several recesses (201), the latch (230) engaging into that recess (201) in the locking position that is in alignment with the through-hole (211).

3. Filter assembly according to claim 1 or 2, **characterized in that** the filter element (2) can be rotated inside the housing (5) when the latch (230) is not arranged in the recess (201).

4. Filter assembly according to any one of claims 1 to 3, **characterized in that** the through-hole (211) extends along a direction that is perpendicular to a plane that contains the protruding direction (X).

5. Filter assembly according to any one of claims 1 to 4, **characterized in that** the housing (5) has a housing lid (35) and **in that** the dome shaped receiving part (210) is arranged on the housing lid (35).

6. Filter assembly according to any one of claims 1 to 5, **characterized in that** the surrounding parts of the housing (5) that surround the dome shaped receiving part (210) have an outward facing surface that is arranged in a plane, whereby the receiving part (210) protrudes outward from said plane into the protruding direction (X).

7. Filter assembly according to any one of claims 1 to 6, **characterizes in that** the protruding direction (X) is the center axis of the filter assembly (A, D).

8. Filter assembly according to any one of claims 1 to 7, **characterized by** a spring element that pretensions the latch (230) towards the locking position.

9. Filter assembly according to any one of claims 1 to 8, **characterized by** a snap-in element provided on the latch (230) or on the housing (5) or on the filter-element (2), whereby the snap-in element engages if the latch (230) is in the locking position.

10. Filter assembly according to any one of claims 1 to 9, **characterized by** a seal that is arranged inside the through-hole (211) and seals against the latch (230), if the latch (230) is arranged in the through-hole (211).

11. Method for assembly of a filter assembly according to any one of claims 1 to 10, **characterized by**
• inserting the filter element (2) into the housing (5),
• rotating the filter element (2) inside the housing, if the recess (201) is not in alignment with the through-hole (211) to bring the recess (201) into alignment with the through hole (211),
• moving the latch (230) into the locking position.

12. A filter element (2) suitable to be used in a filter assembly according to any one of claims 1 to 10, the filter element comprising a filter media (17) and an endcap (22) arranged at one end of the filter media (17), the endcap (22) having a protruding part (200), whereby a recess (201) is provided in the protruding part (200).

13. Use of a filter element according to claim 12 in a filter assembly according to any one of claims 1 to 10.

14. Use of a filter element according to claim 12 in a method according to claim 11.
